(19) Europäisches Patentamt
European Patent Office
Office européen des brevets

(11) **EP 4 367 483 B1**

(12) **EUROPÄISCHE PATENTSCHRIFT**

(45) Veröffentlichungstag und Bekanntmachung des Hinweises auf die Patenterteilung:
**24.12.2025  Patentblatt 2025/52**

(21) Anmeldenummer: **22740379.7**

(22) Anmeldetag: **04.07.2022**

(51) Internationale Patentklassifikation (IPC):
**G01F 1/32** (2022.01)  **G01F 1/325** (2022.01)

(52) Gemeinsame Patentklassifikation (CPC):
**G01F 1/3209; G01F 1/3218; G01F 1/3266**

(86) Internationale Anmeldenummer:
**PCT/EP2022/068376**

(87) Internationale Veröffentlichungsnummer:
**WO 2023/280742 (12.01.2023 Gazette 2023/02)**

(54) **MESSSYSTEM ZUM MESSEN EINES STRÖMUNGSPARAMETERS EINES IN EINER ROHRLEITUNG STRÖMENDEN FLUIDEN MESSSTOFFS**

MEASUREMENT SYSTEM FOR MEASURING A FLOW PARAMETER OF A FLUID MEASUREMENT SUBSTANCE FLOWING IN A PIPELINE

SYSTÈME DE MESURE DE PARAMÈTRE D'ÉCOULEMENT D'UNE SUBSTANCE DE MESURE FLUIDE CIRCULANT DANS UNE CANALISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2021  DE 102021117707**

(43) Veröffentlichungstag der Anmeldung:
**15.05.2024  Patentblatt 2024/20**

(73) Patentinhaber: **Endress+Hauser Flowtec AG 4153 Reinach (CH)**

(72) Erfinder:
• **RIEGER, Anton**
  **79737 Herrischried (DE)**
• **HÖCKER, Rainer**
  **79761 Waldshut (DE)**
• **HOLLMACH, Marc**
  **4056 Basel (CH)**

(74) Vertreter: **Endress + Hauser Group Services (Deutschland) AG+Co. KG Colmarer Straße 6 79576 Weil am Rhein (DE)**

(56) Entgegenhaltungen:
**WO-A1-2016/048146  DE-A1- 102018 132 311
US-A1- 2016 041 016  US-B2- 9 194 730**

• **HULIN J-P ET AL: "EXPERIMENTAL STUDY OF VORTEX EMISSION BEHIND BLUFF OBSTACLES IN A GAS LIQUID VERTICAL TWO-PHASE FLOW", INTERNATIONAL JOURNAL OF MULTIPHASE FLOW, ELSEVIER, AMSTERDAM, NL, vol. 8, no. 5B, 1 October 1982 (1982-10-01), pages 475 - 490, XP009022376, ISSN: 0301-9322, DOI: 10.1016/0301-9322(82)90019-2**

**Beschreibung**

Die Erfindung betrifft ein Meßsystem zum Messen wenigstens eines Strömungsparameters eines in einer Rohrleitung strömenden fluiden Meßstoffs.

In der Prozeßmeß- und Automatisierungstechnik werden für die Messung von Strömungsgeschwindigkeiten von in Rohrleitungen strömenden fluiden Meßstoffen, insb. schnellströmenden und/oder heißen Gasen und/oder Fluidströmen von hoher Reynoldszahl, bzw. von mit einer jeweiligen Strömungsgeschwindigkeit korrespondierenden Strömungsparametern, wie z.B. Volumen- oder Massenströmen bzw. totalisierte Volumen- oder Massen-Durchflüsse, oftmals als Vortex-Durchflußmeßgeräte ausgebildete Meßsysteme verwendet. Beispiele für solche Meßsysteme sind u.a. aus der DE-A 10 2005 003631, EP-A 666 467, der US-A 2006/0230841, der US-A 2008/0072686, der US-A 2011/0154913, der US-A 2011/0247430, US-A 2011/0314929, der US-A 2013/0282309, der US-A 2016/0041016, der US-A 2017/0284841, der US-A 60 03 384, der US-A 61 01 885, der US-B 63 52 000, der US-B 69 10 387, der US-B 69 38 496, der US-B 80 10 312, der US-B 82 00 450, der US-B 83 70 098, der US-B 84 47 536, der WO-A 98/43051, der WO-A 2011/043667, der WO-A 2017/153124, der WO-A 2019/245645, der DE 102018 132311 A1 oder der WO-A 2020/120060 bekannt und werden u.a. auch von der Anmelderin selbst angeboten, beispielsweise unter der Warenbezeichnung "PROWIRL D 200", "PROWIRL F 200", "PROWIRL O 200", "PROWIRL R 200".

Die gezeigten Meßsysteme weisen jeweils einen in das Lumen der jeweiligen, beispielsweise nämlich als Anlagenkomponente eines Wärmeversorgungsnetzes oder eines Turbinenkreislaufes ausgebildeten, Rohrleitung bzw. in ein Lumen eines in den Verlauf nämlicher Rohrleitung eingesetzten Meßrohrs hineinragenden, mithin vom Meßstoff, beispielsweise (flüssigem) Wasser bzw. (Heiß-)Dampf, angeströmten Staukörper zum Erzeugen von zu einer sogenannten Kármánschen Wirbelstrasse aufgereihten Wirbeln innerhalb des unmittelbar stromabwärts des Staukörpers strömenden Teilvolumens des Fluidstroms auf. Die Wirbel werden dabei bekanntlich mit einer von der Strömungsgeschwindigkeit des in einer Hauptströmungsrichtung durch das Meßrohr strömenden Fluids abhängigen Ablösefrequenz ($f_V$) am Staukörper generiert, die - mit der Strouhal-Zahl (Sr ~ $f_V$ / u) als Proportionalitätsfaktor - zumindest für hohe Reynolds-Zahlen (Re) von über 20000 proportional zur Strömungsgeschwindigkeit (u) des am Staukörper vorbei strömenden Fluids ist. Ferner weisen die Meßsysteme einen im Bereich der *Karman'schen* Wirbelstraße in die Strömung, mithin in Lumen der hineinragenden, beispielsweise stromabwärts des Staukörpers positionierten bzw. darin integrierten, Wirbelsensor auf. Nämlicher Wirbelsensor dient im besonderen dazu, Druckschwankungen in der im strömenden Meßstoff ausgebildeten *Kármán'schen* Wirbelstraße zu erfassen und in ein die Druckschwankungen repräsentierendes - beispielsweise elektrisches oder optisches - Wirbelsensorsignal zu wandeln, das mit einem innerhalb des Meßstoffs herrschenden, infolge gegenläufiger Wirbel stromab des - typischerweise prismatischen oder zylindrischen - Staukörpers periodischen Schwankungen unterworfenen Druck korrespondiert, derart, daß das Wirbelsensorsignal eine Nutzkomponente, nämlich eine die Ablösefrequenz repräsentierende, gleichwohl signifikant vom Signalrauschen abweichende Amplitude aufweisende spektrale Signalkomponente enthält.

Bei dem in der US-B 63 52 000, der US-A 2006/0230841 oder der US-A 2017/0284841 jeweils gezeigten Meßsystem weist der Wirbelsensor einen mittels eines - zumeist als dünne und im wesentlichen flachen Membran ausgebildeten - Verformungskörper sowie einer sich ausgehend von einer im wesentlichen planaren Oberfläche nämlichen Verformungskörpers erstreckenden - zumeist plattenförmigen bzw. keilförmigen - Sensorfahne gebildete Sensorbaugruppe auf, die dafür eingerichtet ist, in einer quer zur eigentlichen Hauptströmungsrichtung verlaufenden Detektionsrichtung wirkende Druckschwankungen in der Kármánschen Wirbelstrasse zu erfassen, nämlich in mit den Druckschwankungen korrespondierende Bewegungen des Verformungskörpers zu wandeln, derart, daß die Sensorfahne infolge der Druckschwankungen den Verformungskörper elastisch verformende Pendelbewegungen in Detektionsrichtung ausführt, wodurch Verformungskörper und Sensorfahne zu erzwungenen, gleichwohl außer Resonanz - typischerweise nämlich unterhalb einer niedrigsten mechanische Resonanzfrequenz des Wirbelsensors - liegenden Schwingungen um eine gemeinsame statischen Ruhelage angeregt werden. Der Verformungskörper weist ferner ein - zumeist kreisringförmiges - äußeres Randsegment auf, das dafür eingerichtet ist, mit einer dem Haltern des Verformungskörper bzw. des damit gebildeten Sensors an einer Wandung eines Rohrs dienenden Fassung hermetisch dicht, beispielsweise nämlich stoffschlüssige, verbunden zu werden, derart, daß der Verformungskörper eine in der Wandung des Rohrs vorgesehene Öffnung überdeckt bzw. hermetisch verschließt und daß die die Sensorfahne tragende Oberfläche des Verformungskörpers dem Meßstoff führenden Lumen des Meßrohrs bzw. der Rohrleitung zugewandt ist, mithin die Sensorfahne in nämliches Lumen hineinragt. Zwecks des Generierens des Wirbelsensorsignals umfaßt der Wirbelsensor ferner ein entsprechendes, beispielsweise nämlich mittels eines mit der Sensorbaugruppe mechanisch gekoppelten bzw. darin integrierten Kondensator oder mittels eines als piezoelektrischer Wandler dienenden Piezostapel gebildetes, Wandlerelement, das dafür eingerichtet ist, Bewegungen des Verformungskörpers, nicht zuletzt auch mit Druckschwankungen korrespondierende Bewegungen des Verformungskörpers, bzw. des ggf. vorhandenen Ausgleichskörper zu erfassen und einem elektrischen oder optischen Trägersignal aufzumodulieren. Wie u.a. in der US-B 63 52 000 oder US-A 2017/0284841 jeweils gezeigt, kann die Sensorbaugruppen bzw. der damit gebildet Wirbelsensor zudem einen sich ausgehend von einer der die Sensorfahne tragende Oberfläche abgewandten Oberfläche des Verformungskörpers erstreckenden, zumeist stab-, platten- oder hülsenförmig ausgebildeten Ausgleichskörper aufweisen, der im besonderen dazu dient, aus Bewegungen der Sensorbaugruppe resultierenden Kräften bzw. Momenten, beispielsweise infolge von Vibrationen der Rohrleitung, zu kompensieren bzw. daraus resultierende unerwünschte Bewegungen der Sensorfahne zu vermeiden.

Der Wirbelsensor ist auf einer dem Meßstoff führenden Lumen abgewandten Seite ferner mit einer - typischerweise druck- und schlagfest gekapselten, ggf. auch nach außen hin hermetisch abgedichteten - Umformer-Elektronik verbunden. Die Umformer-Elektronik weist eine entsprechende, mit dem Wirbelsensor bzw. dessen Wandlerelement via Anschlußleitungen, ggf. unter Zwischenschaltung elektrischer Barrieren und/oder galvanischer Trennstellen, elektrisch verbundene digitale Meßschaltung zum Verarbeiten bzw. Auswerten des Wirbelsensorsignals und zum Erzeugen von digitalen Meßwerten für den jeweils zu erfassende Strömungsparameter, beispielsweise nämlich die Strömungsgeschwindigkeit, der Volumenstrom und/oder der Massenstrom, auf. Im besonderen ist die Umformer-Elektronik dafür eingerichtet anhand des wenigstens einen Wirbelsensorsignals die Ablösefrequenz repräsentierende digitale Wirbelfrequenz-Meßwerte zu ermitteln sowie unter Verwendung eines oder mehrerer Wirbelfrequenz-Meßwerte Meßwerte für den wenigstens einen Strömungsparameter zu berechnen und auszugeben, beispielsweise an eine entsprechend im Meßsystem vorgesehenes Anzeigeelement. Wie u.a. auch in den eingangs erwähnten US-B 69 38 496, US-B 69 10 387, US-B 80 10 312, US-B 82 00 450, US-B 83 70 098 oder US-B 84 47 536 gezeigt, können Meßsysteme der in Rede stehenden Art desweiteren einen, beispielsweise stromabwärts des Staukörpers oder darin angeordneten, Temperatursensor und/oder einen, beispielsweise stromabwärts des Staukörpers oder darin angeordneten, Drucksensor aufweisen und kann die Umformer-Elektronik zudem eingerichtet sein, Meßwerte für den wenigstens einen Strömungsparameter auch unter Verwendung eines vom Temperatursensor bereitgestellten Temperatursensorsignals bzw. unter Verwendung eines vom Drucksensor bereitgestellten Drucksensorsignals zu berechnen. Die üblicherweise in einem Schutz-Gehäuse aus Metall und/oder schlagfestem Kunststoff untergebrachte Umformer-Elektronik industrietauglicher bzw. in der industriellen Meßtechnik etablierter Meßsysteme stellen zudem zumeist auch einem Industriestandard, beispielsweise der DIN IEC 60381-1, konforme externe Schnittstellen für die Kommunikation mit übergeordneten, beispielsweise mittels Speicherprogrammierten Steuerungen (SPS) gebildete, Meß- und/oder Reglersysteme bereit. Ein solche externe Schnittstelle kann beispielsweise als in eine Stromschleife eingliederbarer Zweileiter-Anschluß ausgebildete und/oder mit etablierten industriellen Feldbussen kompatibel ausgebildet sein.

Wie in der eingangs erwähnten US-A 2016/0041016, US-A 2013/0282309 bzw. US-A 2011/0314929 jeweils erörtert, können die mittels Meßsystemen der in Rede stehenden Art ermittelten Strömungsmeßwerte für den regelmäßig nicht auszuschließenden Fall, daß im Meßstoff auch Fremdstoffe enthalten sind, in erheblichem Maße fehlerhaft sein; dies nicht zuletzt auch für den häufig auftretenden Fall, daß im ansonsten flüssigen Meßstoff darin eingeschlossenes Gas mitgeführt wird, beispielsweise in Form von Gasblasen, bzw. Meßstoff und Fremdstoff(e) eine Blasenströmung bilden, und/oder derart, daß das Vorliegen von Fremdstoffen von der Umformer-Elektronik nicht oder spät detektiert wird.

Ausgehend vom vorbezeichneten Stand der Technik besteht eine Aufgabe der Erfindung darin, Meßsysteme der vorbezeichneten Art dahingehend zu verbessern, daß damit zumindest das Auftreten von erhöhte Meßfehler verursachenden Fremdstoffen in einem strömenden Meßstoff frühzeitig detektiert werden kann und/oder daß durch Fremdstoffe im Meßstoff verursachte Meßfehler verringert werden können.

Zur Lösung der Aufgabe besteht die Erfindung in einem Meßsystem zum Messen wenigstens eines, beispielsweise zeitlich veränderlichen, Strömungsparameters, beispielsweise einer Strömungsgeschwindigkeit und/oder einer Volumenstrom und/oder einer Massenstrom, eines in einer Rohrleitung strömenden, beispielsweise zumindest gelegentlich einphasigen und/oder zumindest gelegentlich mehrphasigen, fluiden Meßstoffs, beispielsweise nämlich eines Gases, einer Flüssigkeit oder einer Dispersion, welches Meßsystem umfaßt:

- ein in den Verlauf nämlicher Rohrleitung einsetzbares Rohr mit einem Lumen, das dafür eingerichtet ist, den in der Rohrleitung strömende Meßstoff zu führen bzw. von nämlichem Meßstoff durchströmt zu werden;

- einen im Lumen des Rohrs angeordneten, beispielsweise prismatischen oder zylindrischen, Staukörper, der dafür eingerichtet ist, im daran vorbei strömenden Meßstoff Wirbel mit einer von einer momentanen Strömungsgeschwindigkeit ($u$) nämlichen Meßstoffs abhängigen Ablösefrequenz ($f_V \sim u$) zu generieren, derart, daß im stromabwärts des Staukörpers strömenden Fluid eine *Kärmän'sche* Wirbelstrasse ausgebildet ist;

- einen stromabwärts des Staukörpers angeordneten Wirbelsensor, der wenigstens eine, beispielsweise niedrigste und/oder stets oberhalb der Ablösefrequenz liegende, mechanische Resonanzfrequenz ($f_R$) aufweist und der eingerichtet ist, angeregt vom strömenden Meßstoff, mechanische Schwingungen um eine statische Ruhelage auszuführen und wenigstens ein nämliche Schwingungen repräsentierendes, beispielsweise elektrisches oder optisches, Wirbelsensorsignal bereitzustellen, das eine erste Nutzkomponente, nämlich eine Schwingungen des Wirbelsensors mit der Ablösefrequenz ($f_V$) repräsentierende - beispielsweise eine nicht unter einem dafür vorgegebenen Schwellenwert für Signalrauschen liegenden Signalpegel aufweisende - erste spektrale Signalkomponente (Wirbelkomponente) enthält, und das eine zweite Nutzkomponente, nämlich eine Resonanz-Schwingungen des Wirbelsensors mit dessen mechanischer Resonanzfrequenz ($f_R$) repräsentierende - beispielsweise eine nicht unter einem dafür vorgegebenen Schwellenwert für Signalrauschen liegenden Signalpegel aufweisende - zweite spektrale Signalkomponente (Resonanzkomponente) enthält;

- sowie eine, beispielsweise mittels wenigstens eines Mikroprozessors gebildete, Umformer-Elektronik zum Auswerten des wenigstens einen Wirbelsensorsignals und zum Ermitteln von, beispielsweise digitalen, Meßwerten für den wenigstens einen Strömungsparameter;

- wobei die Umformer-Elektronik eingerichtet ist, das wenigstens eine Wirbelsensorsignal zu empfangen und auszuwerten, nämlich zumindest anhand der ersten Nutzkomponente des wenigstens einen Wirbelsensorsignals die Ablösefrequenz repräsentierende, beispielsweise digitale, Wirbelfrequenz-Meßwerte zu ermitteln sowie anhand der zweiten Nutzkomponente des wenigstens einen Wirbelsensorsignals eine Amplitude der Resonanz-Schwingungen des Wirbelsensors repräsentierende, beispielsweise digitale, Amplituden-Meßwerte zu ermitteln;

- und wobei die Umformer-Elektronik eingerichtet ist, unter Verwendung eines oder mehrerer Amplituden-Meßwerte zu ermitteln, ob und/oder inwieweit im Meßstoff Fremdstoffe, beispielsweise in einer Flüssigkeit mitgeführte Gaseinschlüsse (Blasen), enthalten sind und/oder zu ermitteln, ob der Meßstoff ein- oder mehrphasig ausgebildet ist, sowie unter Verwendung eines oder mehrerer Wirbelfrequenz-Meßwerte, beispielsweise digitale, Strömungsparameter-Meßwerte, nämlich Meßwerte für den wenigstens einen Strömungsparameter zu berechnen.

Nach einer ersten Ausgestaltung der Erfindung ist ferner vorgesehen, daß die Umformer-Elektronik eingerichtet, ist die Strömungsparameter-Meßwerte auch unter Verwendung einer Strouhal-Zahl (Sr ~ $f_V$ / u), nämlich einer ein Verhältnis der Ablösefrequenz ($f_V$) zur Strömungsgeschwindigkeit (u) des am Staukörper vorbei strömenden Fluids repräsentierenden Kennzahl zu berechnen.

Nach einer zweiten Ausgestaltung der Erfindung ist ferner vorgesehen, daß die Umformer-Elektronik eingerichtet ist, die Strömungsparameter-Meßwerte zumindest im Falle eines zweiphasigen Meßstoffs jeweils auch unter Verwendung eines oder mehrerer Amplituden-Meßwerte zu berechnen.

Nach einer dritten Ausgestaltung der Erfindung ist ferner vorgesehen, daß die Umformer-Elektronik eingerichtet ist, unter Verwendung wenigstens eines der Amplituden-Meßwerte, beispielsweise auch unter Verwendung wenigstens eines der Wirbelfrequenz-Meßwerte, einen Kennzahlwert für eine ein Verhältnis eines in eine quer zu einer gedachten Längsachse des Meßrohrs verlaufenden Richtung auf den Wirbelsensor wirkenden statischen Druckes ($p_{stat}$) zu einem auf den Wirbelsensor in Richtung der gedachten Längsachse des Meßrohrs wirkenden dynamischen Druck ($p_{dyn}$) charakterisierende Strömungskennzahl zu berechnen, beispielsweise derart, daß daß die Strömungskennzahl einem Druckbeiwert des Wirbelsensors, einer Euler-Zahl oder einer Kavitationszahl des Meßstoffs entspricht. Diese Ausgestaltung der Erfindung weiterbildend ist die Umformer-Elektronik ferner eingerichtet, den Kennzahlwert mit wenigstens einem, beispielsweise vorab unter Referenzbedingungen und/oder anhand des Wirbelsensorsignals ermittelten, Schwellenwert zu vergleichen, der einen für das Meßsystem und/oder den Meßstoff vorgegebenen, beispielsweise maximal zulässigen und/oder kritischen, Fremdstoff-Anteil repräsentiert. Beispielsweise kann die Umformer-Elektronik zudem auch eingerichtet sein, den Schwellenwert anhand des Wirbelsensorsignals, beispielsweise nämlich unter Verwendung wenigstens eines der Wirbelfrequenz-Meßwerte, zu ermitteln und/oder eine, beispielsweise vor Ort visuell und/oder akustisch wahrnehmbare und/oder in ein Datensignal codierte und/oder als Alarm deklarierte, Meldung auszugeben, falls der den Kennzahlwert den wenigstens einen Schwellenwert überschritten hat. Alternativ oder in Ergänzung kann der wenigstens eine Schwellenwert mit einem vorab unter Referenzbedingungen, nämlich für ein durch den Meßwandler strömendes, beispielsweise einphasiges, Kalibrierfluid, wie z.B. Wasser, ermittelten Kennzahlwert korrespondieren.

Nach einer vierten Ausgestaltung der Erfindung ist ferner vorgesehen, daß die Umformer-Elektronik ein erstes Signalfilter aufweist, das dafür eingerichtet ist, an einem Signaleingang das Wirbelsensorsignal zu empfangen und an einem Filterausgang ein die erste Nutzkomponente des Wirbelsensorsignals enthaltendes, beispielsweise nämlich die zweite Nutzkomponente stets nur abgeschwächt oder nicht enthaltendes, erstes, beispielsweise digitales, Nutzsignal bereitzustellen und/oder daß die Umformer-Elektronik ein zweites Signalfilter aufweist, das dafür eingerichtet ist, an einem Signaleingang das Wirbelsensorsignal zu empfangen und an einem Filterausgang ein die zweite Nutzkomponente des Wirbelsensorsignals enthaltendes, beispielsweise nämlich die erste Nutzkomponente stets nur abgeschwächt oder nicht enthaltendes, zweites, beispielsweise digitales, Nutzsignal bereitzustellen. Diese Ausgestaltung der Erfindung weiterbildend ist die Umformer-Elektronik ferner eingerichtet, die Wirbelfrequenz-Meßwerte unter Verwendung des ersten Nutzsignals und/oder die Amplituden-Meßwerte unter Verwendung des zweiten Nutzsignals zu ermitteln.

Nach einer fünften Ausgestaltung der Erfindung ist ferner vorgesehen, daß die Umformer-Elektronik eingerichtet ist, eine diskrete Fourier-Transformation (DFT) des wenigstens einen Wirbelsensorsignals zu generieren sowie die Wirbelfrequenz-Meßwerte und/oder die Amplituden-Meßwerte basierend auf nämlicher diskreter Fourier-Transformation des wenigstens einen Wirbelsensorsignals zu ermitteln.

Nach einer sechsten Ausgestaltung der Erfindung ist ferner vorgesehen, daß die Umformer-Elektronik eingerichtet ist, eine Autokorrelation (AKF) des wenigstens einen Wirbelsensorsignals zu berechnen sowie die Wirbelfrequenz-Meßwerte basierend auf nämlicher Autokorrelation des wenigstens einen Wirbelsensorsignals zu ermitteln.

Nach einer siebenten Ausgestaltung der Erfindung ist ferner vorgesehen, daß die Umformer-Elektronik wenigstens eine Wandlerschaltung aufweist, die eingerichtet ist, das wenigstens eine Wirbelsensorsignal zu empfangen und zu digitalisieren, beispielsweise nämlich in ein digitales Wirbelsensorsignal zu wandeln und nämliches digitales Wirbelsensorsignal an einem Digitalausgang der Wandlerschaltung bereitzustellen.

Nach einer achten Ausgestaltung der Erfindung ist ferner vorgesehen, daß der Wirbelsensor einen, beispielsweise membranartigen und/oder scheibenförmigen, Verformungskörper mit einer dem Lumen zugewandten ersten Oberfläche und einer gegenüberliegenden, beispielsweise zur ersten Oberfläche zumindest teilweise parallelen, zweiten Oberfläche sowie wenigstens ein oberhalb und/oder auf der zweiten Oberfläche des Verformungskörper angeordnetes, beispielsweise nämlich am Verformungskörper angebrachtes und/oder in dessen Nähe positioniertes, Wandlerelement, das dafür eingerichtet ist, Bewegungen des Verformungskörpers, beispielsweise von dessen zweiter Oberfläche, zu erfassen und in das Wirbelsensorsignal zu wandeln, aufweist. Diese Ausgestaltung der Erfindung weiterbildend weist der Wirbelsensor eine sich ausgehend von der ersten Oberfläche des Verformungskörpers bis zu einem distalen Ende erstreckende, beispielsweise plattenförmige oder keilförmige, Sensorfahne auf.

Nach einer Weiterbildung der Erfindung ist ferner vorgesehen, daß das Meßsystem ein mit der Umformer-Elektronik gekoppeltes Anzeigeelement zur Ausgabe von von der Umformer-Elektronik bereitgestellten Meßwerten für den wenigstens einen Strömungsparameter und/oder von mittels der Umformer-Elektronik generierten Meldungen umfaßt.

Ein Grundgedanke der Erfindung besteht darin, die mit dem Fremdstoff-Anteil korrelierte (Schwingungs-) Amplitude der durch den strömenden, ggf. mit Fremdstoff beladenen Meßstoff angeregten Resonanzschwigungen des Wirbelsensors zu erfassen und für die Detektion des Fremdstoffs, ggf. auch für eine den Fremdstoff-Anteil quantifizierende Berechnung entsprechend auszuwerten. Ein Vorteil der Erfindung ist u.a. auch darin zusehen, daß die Detektion von im Meßstoff enthaltenem Fremdstoff allein durch eine entsprechenden Modifikation der in der Umformer-Elektronik moderner Meßsysteme typischerweise als Firm- und/oder Software implementierten Berechnungsalgorithmik eingerichtet, beispielsweise nämlich auch bei bereits installierten Meßsysteme durch ein entsprechendes Upgrade von deren Firm- bzw. Software einfach nachgerüstet werden kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:

Fig. 1, 2         schematisch in verschieden Ansichten ein - hier als Wirbel-Durchflußmeßgerät ausgebildetes - Meßsystem mit einem Wirbelsensor und einer Umformer-Elektronik zum Messen wenigstens eines Strömungsparameters eines in einer Rohrleitung strömenden Fluids;

Fig. 3         exemplarisch Leistungsdichtespektren von mittels eines Meßsystems gemäß der Fig. 1 bzw. 2 bei unterschiedlichen Beladungen des Meßstoffs mit Fremdstoff (in Wasser mitgeführte Gasblasen) generierten Wirbelsensorsignalen; und

Fig. 4a, 4b, 4c, 4d     schematisch, teilweise auch geschnittenen Ansichten ein Ausführungsbeispiel eines für die Verwendung in einem Meßsystem gemäß der Fig. 1 bzw. 2 geeigneten, Wirbelsensors.

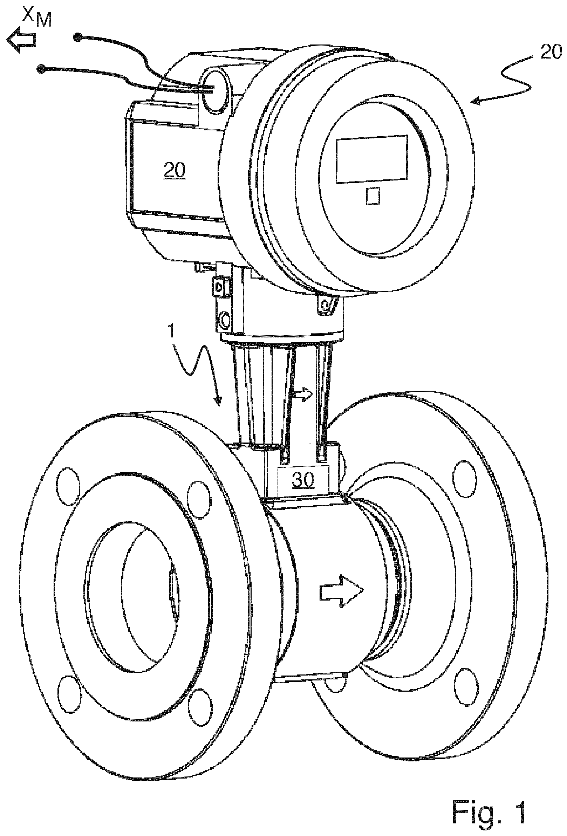

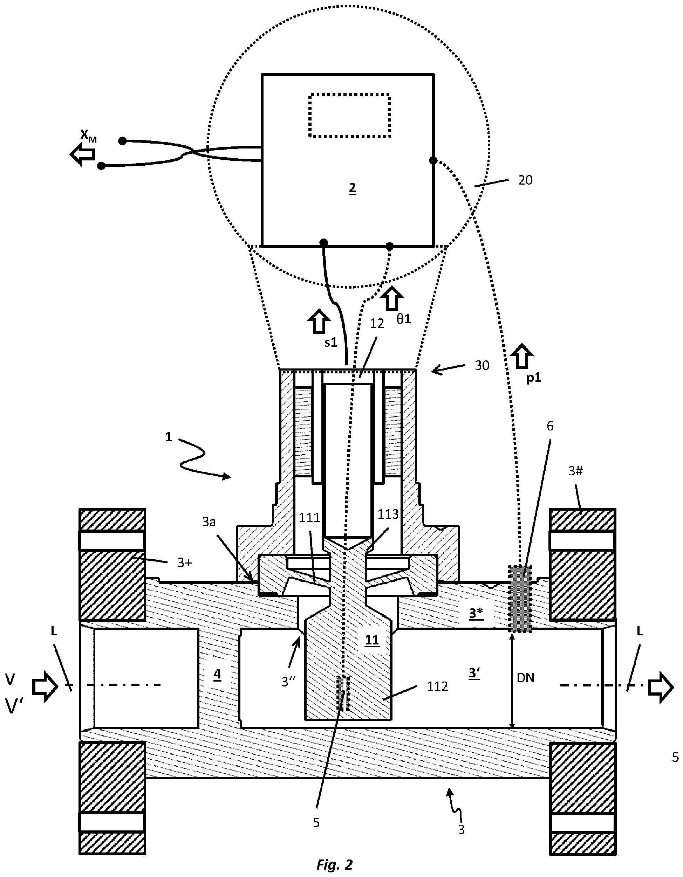

In Fig. 1 und 2 ist ein Ausführungsbeispiel für ein Meßsystem zum Messen wenigstens eines, ggf. auch zeitlich veränderlichen Strömungsparameters, beispielsweise nämlich einer Strömungsgeschwindigkeit u und/oder einer Volumen- und/oder Massenstrom, eines in einer Rohrleitung strömenden fluiden Meßstoffs, beispielsweise einer Flüssigkeit, eines Gases oder einer Dispersion, gezeigt. Die Rohrleitung kann beispielsweise als Anlagenkomponente eines Trinkwassernetztes, eines Wärmeversorgungsnetzes oder eines Turbinenkreislaufes ausgebildet, mithin kann der Meßstoff beispielsweise Wasser oder Dampf, insb. auch gesättigter Dampf oder überhitzter Dampf, oder beispielsweise auch ein aus einer Dampfleitung abgeführtes Kondensat sein. Meßstoff kann aber beispielsweise auch ein Kryogas, ein Erdöl oder eine (komprimiertes) Erd- oder ein Biogas sein, mithin kann die Rohrleitung beispielsweise auch Komponente einer Erd- oder einer Biogasanlage oder eines Gasversorgungsnetzes sein.

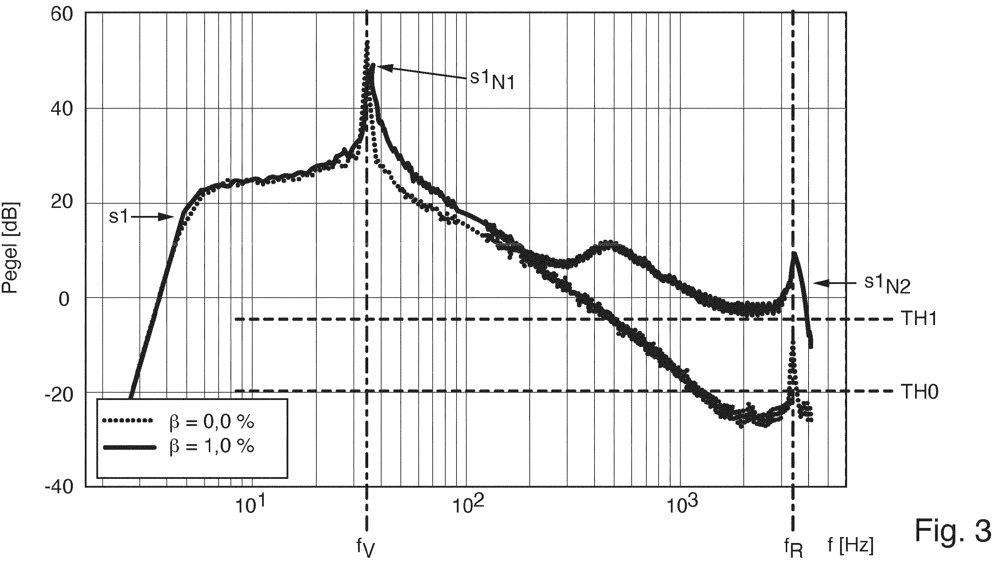

Das Meßsystem umfaßt ein in der Verlauf der vorbezeichneten Rohrleitung einsetzbares Rohr 3 mit einem von einer - beispielsweise metallischen - Wandung 3* des Rohrs umhüllten Lumen 3', das sich von einem Einlaßende 3+ bis zu einem Auslaßende 3# erstreckt und das dafür eingerichtet ist, das in der Rohrleitung strömende Fluid zu führen bzw. von nämlichem Fluid in Richtung einer durch eine gedachte Längsachse des Meßrohrs definieren (Haupt-)Strömungsrichtung des Meßsystems definierenden durchströmt zu werden. Im hier gezeigten Ausführungsbeispiel ist am Einlaßende 3+ wie auch am Auslaßende 3# ferner jeweils ein dem Herstellen einer Leckage freien Flanschverbindung mit jeweils einem korrespondierenden Flansch an einem ein- bzw. auslaßseitig Leitunsgsegment der Rohrleitung dienender Flansch vorgesehen. Desweiteren kann das Rohr 3, wie in Fig. 1 oder 2 dargestellt, im wesentlichen gerade, beispielsweise nämlich als Hohlzylinder mit zumindest abschnittsweise kreisförmigem Querschnitt ausgebildet sein, derart, daß das Rohr 3 eine das Einlaßende 3+ und das Auslaßende 3# imaginär verbindende gedachte gerade Längsachse L aufweist. Das Meßsystem weist ferner einen innerhalb des Lumens 3' angeordneten - beispielsweise prismatischen oder zylindrischen - Stauköper 4, der dafür eingerichtet ist, im daran vorbei strömenden Fluid Wirbel mit einer von einer momentanen Strömungsgeschwindigkeit u nämlichen Fluids abhängigen Ablösefrequenz $f_V$ ($f_V \sim u$), zu generieren, derart, daß im stromabwärts des Staukörpers strömenden Fluid eine *Kármánsche* Wirbelstraße ausgebildet ist, sowie einen - beispielsweise stromabwärts des Staukörpers 4 angeordneten oder darin integrierten - Wirbelsensor 1 zum Erfassen von Wirbeln der *Kármánsche* Wirbelstraße, beispielsweise nämlich damit einhergehenden, nämlich bei konstanter Strömungsgeschwindigkeit u periodischen Druckschwankungen im strömenden Fluid, auf. Nämlicher Wirbelsensor 1 ist im besonderen dafür eingerichtet, wenigstens ein, insb. elektrisches oder optisches, sich zeitlich änderndes, beispielsweise nämlich mit den vorbezeichneten Druckschwankungen korrespondierendes, Wirbelsensorsignal s1 bereitzustellen; dies im besonderen in der Weise, daß das Wirbelsensorsignal s1 - wie auch aus Fig. 3 ohne weiteres ersichtlich - eine erste Nutzkomponente $s1_{N1}$ (Wirbelkomponente), nämlich eine die Ablösefrequenz $f_V$ repräsentierende - beispielsweise eine nicht unter einem vorgegebenen Schwellenwert TH1 für Signalrauschen liegende, nämlich zumindest eine minimale spektrale Leistungsdichte bzw. eine entsprechende minimale Amplitude aufweisende, und/oder nicht oberhalb eines Schwellenwerts TH2 für Signalrauschen liegende, nämlich höchstens eine maximale spektrale Leistungsdichte bzw. eine entsprechende maximale Amplitude aufweisende - erste spektrale Signalkomponente (@$f_V$) enthält, falls im stromabwärts des Staukörpers strömenden Fluid eine *Kármánsche* Wirbelstraße ausgebildet ist. Indem dem Wirbelsensor 1 naturgemäß auch eine Vielzahl natürlicher Schwingungsmoden innewohnen, von denen im Betrieb des Meßsystems eine oder mehrere angeregt sein können, enthält das Wirbelsensorsignal - wie auch aus Fig. 3 ohne weiteres ersichtlich - typischerweise auch eine oder mehrere spektrale Signalkomponente, die mit einer jeweiligen Resonanzfrequenz ($f_R$) eines der vorbezeichneten Schwingungsmoden korrespondieren. Im besonderen hat sich gezeigt, daß der Wirbelsensor 1 durch das daran vorbeiströmende Fluid auch zu Vibrationen auf einer oder mehreren der vorbezeichneten Resonanzfrequenzen angeregt sein kann, bzw. daß umgekehrt zumindest eine der vorbezeichneten Vibrationen nicht nennenswert oder gar nicht angeregt ist, falls kein Fluid am Wirbelsensor vorbeiströmt. Dementsprechend enthält das Wirbelsensorsignal - wie auch aus Fig. 3 ohne weiteres ersichtlich - zumindest zeitweise auch wenigstens eine zweite

Nutzkomponente $s1_{N2}$ (Resonanzkomponente), nämlich eine - insb. hinsichtlich einer spektralen Leistungsdichte bzw. Amplitude nicht unter einem dafür vorgegebenen Schwellenwerts (TH0) für Signalrauschen und/oder gelegentlich oberhalb eines Schwellenwerts (TH1) für als Dispersion ausgebildeten Meßstoff bzw. im Meßstoff mitgeführtem Fremdstoff liegende - zweite spektrale Signalkomponente (@$f_R$), die eine mechanische Resonanzfrequenz $f_R$ des Wirbelsensors - beispielsweise nämlich eine niedrigste Resonanzfrequenz und/oder eine stets oberhalb der Ablösefrequenz $f_V$ liegende Resonanzfrequenz und/oder eine einer Resonanzfrequenz eines der Detektion der Wirbel dienlichen natürlichen Schwingungsmodes - repräsentiert; dies insb. dann, falls Fluid am Wirbelsensor vorbeiströmt und/oder dann nicht, falls kein Fluid am Wirbelsensor vorbeiströmt.

Nach einer weiteren Ausgestaltung der Erfindung weist das Meßsystem einen Temperatursensor 5, der eingerichtet ist, wenigstens ein Temperatursensorsignal θ1 bereitzustellen, das einer Änderung einer Temperatur des strömenden Fluids mit einer Änderung wenigstens eines Signalparameters folgt, und/oder weist das Meßsystem einen Drucksensor 6 auf, der eingerichtet ist, wenigstens ein Drucksensorsignal p1 bereitzustellen, das einer Änderung eines, insb. statischen, Drucks des strömenden Fluids mit einer Änderung wenigstens eines Signalparameters folgt. Der Temperatursensor kann beispielsweise stromabwärts des Staukörpers, ggf. auch innerhalb des Wirbelsensors, oder - wie auch in Fig. 2 schematisch dargestellt - innerhalb des Staukörpers angeordnet sein. Ferner kann auch der Drucksensor beispielsweise stromabwärts des Staukörpers oder innerhalb des Staukörpers angeordnet sein.

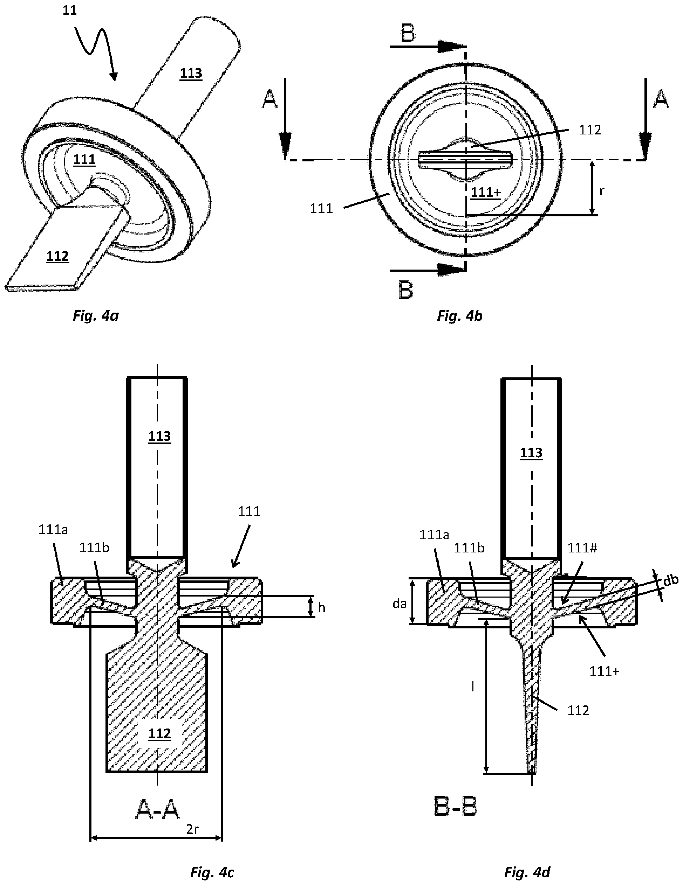

Gemäß einer weiteren Ausgestaltung der Erfindung ist der Wirbelsensor 1, wie auch in Fig. 2 und den Fig. 4a, 4b, 4c, 4d jeweils dargestellt bzw. aus einer Zusammenschau nämlicher Figuren ohne weiteres ersichtlich, mittels eines, insb. membranartigen bzw. scheibenförmigen, Verformungskörpers 111 sowie einer eine linksseitige erstes Seitenfläche 112+ sowie eine rechtsseitige zweite Seitenfläche 112# aufweisenden Sensorfahne 112 gebildet, die sich ausgehend von einer ersten Oberfläche 111+ des Verformungskörpers 111 bis zu einem distalen, nämlich vom Verformungskörper 111 bzw. dessen Oberfläche 111+ entfernten (freien) Ende erstreckt und die die dafür eingerichtet ist, von strömenden Fluid umströmt zu werden. Der Wirbelsensor und der Staukörper sind hierbei im besonderen so dimensioniert und angeordnet, daß die Sensorfahne 112 in einem solchen Bereich in das Lumen 3* des Rohrs bzw. das darin geführte Fluid hineinragt, der im Betrieb des Meßsystems regelmäßig von der *Kármánschen* Wirbelstraße eingenommen wird. Der Verformungskörper 111 weist ferner eine der ersten Oberfläche 111+ gegenüberliegende, beispielsweise zur ersten Oberfläche 111+ zumindest teilweise parallele, zweite Oberfläche 111# sowie ein, beispielsweise kreisringförmiges und/oder mit einer Dichtfläche versehenes, äußeres Randsegment 111a auf. Das äußere Randsegment 111a hat eine Dicke, die - wie in den Fig. 2 bzw. 4a, 4b, 4c, 4d angedeutet - im Vergleich zu einer minimalen Dicke eines von nämlichem Randsegment 111a eingeschlossen inneren - hier nämlich die Sensorfahne 112 tragenden - Segment 111b wesentlich größer ist. Verformungskörper 111 und Sensorfahne 112 sind im besonderen dafür eingerichtet, zu erzwungenen Schwingungen um eine gemeinsame statischen Ruhelage angeregt zu werden, derart, daß die Sensorfahne 112 den Verformungskörper 111 elastisch verformende Pendelbewegungen in einer - im wesentlichen quer zur vorbezeichneten (Haupt-)Strömungsrichtung bzw. quer zur vorbezeichneten Längsachse des Meßrohrs verlaufenden - Detektionsrichtung bzw. Schwingungsbewegungen gemäß einer dem Wirbelsensor innewohnenden natürlichen Schwingungsmode ausführt. Die Sensorfahne 112 weist dementsprechend gemäß einer weiteren Ausgestaltung der Erfindung eine Breite b, gemessen als eine maximale Erstreckung in Richtung der (Haupt-)Strömungsrichtung, auf die wesentlich größer ist, als eine Dicke d der Sensorfahne 112, gemessen als eine maximale seitlich Erstreckung in Richtung der Detektionsrichtung. Im in den Fig. 4a, 4b, 4c, 4d dargestellten Ausführungsbeispiel ist die Sensorfahne 112 im wesentlichen keilförmig ausgebildet; sie kann aber beispielsweise auch, wie bei derartigen Wirbelsensoren durchaus üblich, als eine relativ dünne, ebene Platte ausgebildet sein. Nach einer weiteren Ausgestaltung der Erfindung sind der Wirbelsensor 1 und das Rohr 3 ferner so dimensioniert, daß eine Länge l der Sensorfahne 112, gemessen als minimaler Abstand zwischen einem proximalen, nämlich an den Verformungskörper 111 grenzenden Ende der Sensorfahne 112 bis zum distalen Ende der Sensorfahne 112 mehr als einer Hälfte eines Kalibers DN des Rohrs 3 bzw. weniger als 95% nämlichen Kalibers DN entspricht. Die Länge l kann beispielsweise - wie bei vergleichsweise kleinem Kaliber von weniger als 50 mm durchaus üblich - auch so gewählt sein, daß nämliches distales Ende der Sensorfahne 112 nur noch einen sehr geringen minimalen Abstand zur Wandung 3* des Rohrs 3 aufweist. Bei Rohren mit vergleichsweise großem Kaliber von 50 mm oder mehr kann die Sensorfahne 112 - wie bei Meßsystemen der in Rede stehenden Art durchaus üblich bzw. wie auch aus der Fig. 2 ersichtlich - beispielsweise auch deutlich kürzer ausgebildet sein, als eine Hälfte eines Kalibers des Rohrs 3. Verformungskörper 111 und Sensorfahne 112 können desweiteren beispielsweise Bestandteile ein und desselben monolithischen Formteils sein, das beispielsweise gegossen oder durch ein generatives Verfahren, wie etwa 3D-Laserschmelzen, hergestellt ist; Verformungskörper und Sensorfahne können aber auch als zunächst voneinander getrennte bzw. erst nachträglich stoffschlüssig miteinander verbundene, beispielsweise nämlich miteinander verschweißte bzw. verlötete, Einzelteile ausgebildet, mithin aus entsprechend stoffschlüssig miteinander verbindbaren Materialien hergestellt sein. Der Verformungskörper 111 kann - wie bei derartigen Wirbelsensoren durchaus üblich - zumindest anteilig, beispielsweise nämlich überwiegend oder vollständig, aus einem Metall, wie z.B. Edelstahl bzw. einer Nickelbasislegierung, bestehen. Ebenso kann auch die Sensorfahne zumindest anteilig aus einem Metall, beispielsweise nämlich einem Edelstahl bzw. einer Nickelbasislegierung, bestehen; insbesondere können der Verformungskörper 111 und die Sensorfahne 112 auch aus dem gleichen Material hergestellt werden. Ferner weist der Wirbelsensor ein - beispielsweise als piezoelektrischer Wandler, als Komponente eines Kondensators ausgebildetes, kapazitives oder beispielsweise auch als Komponente eines Fotodetektor ausgebildetes, optisches - Wandlerelement 12 zum Generieren eines zeitlich ändernde - typischerweise nämlich zumindest zeitweise periodische - Bewegungen der Sensorfahne bzw. gleichermaßen zeitlich ändernde Verformungen des Verformungskörpers 111 repräsentierenden, hier auch als Wirbelsensorsignal dienenden Signals, beispielsweise eine durch die vorbezeichneten Bewegungen modulierte veränderliche elektrische Spannung oder entsprechend moduliertes Laserlicht. Der Wirbelsensor 1 ist zudem in das Rohr 3 eingesetzt, derart, daß die erste Oberfläche des Verformungskörpers 111 dem Lumen 3' des Rohrs zugewandt ist, mithin die Sensorfahne in nämliches Lumen hineinragt.

Der Wirbelsensor 1 ist im in Fig. 1 bzw. 2 gezeigten Ausführungsbeispiel von außen durch eine in der Wandung eingeformte Öffnung 3" hindurch in das Lumen des Rohrs eingeführt und im Bereich nämlicher Öffnung - beispielsweise auch wieder lösbar - von außen an der Wandung 3* fixiert, und zwar so, daß die Oberfläche 111+ des Verformungskörpers 111 dem Lumen 3' des Rohrs 3 zugewandt ist, mithin die Sensorfahne 112 in nämliches Lumen hineinragt. Insbesondere ist der Sensor 1 so in die Öffnung 3"eingesetzt, daß der Verformungskörper 111 die Öffnung 3" überdeckt bzw. hermetisch verschließt. Nämliche Öffnung kann beispielsweise so ausgebildet sein, daß sie - wie bei Meßsystemen der in Rede stehenden Art durchaus üblich - einen (Innen-)Durchmesser aufweist, der in einem Bereich zwischen 10 mm und ca. 50 mm liegt. Nach einer weiteren Ausgestaltung der Erfindung ist in der der Öffnung 3" eine dem Haltern des Verformungskörpers an der Wandung 3* dienende Fassung 3a ausgebildet. Der Wirbelsensor 1 kann hierbei beispielsweise durch stoffschlüssiges Verbinden, insb. nämlich durch Verschweißen oder Verlöten, von Verformungskörper 111 und Wandung 3* am Rohr 3 fixiert sein; er kann aber beispielsweise auch mit dem Rohr 3 lösbar verbundenen, beispielsweise nämlich damit verschraubt bzw. daran angeschraubt sein. In der der Fassung 3a kann ferner wenigstens eine, beispielsweise auch umlaufende bzw. kreisringartige, Dichtfläche ausgebildet sein, die dafür eingerichtet ist, im Zusammenspiel mit dem Verformungskörper 111 und einem ggf. vorgesehenen, beispielsweise ringförmige oder ringscheibenförmige, Dichtelement die Öffnung 3" entsprechend abzudichten. Nicht zuletzt für den Fall, daß der Wirbelsensor in die vorbezeichnete Fassung 3a eingesetzt und lösbar mit dem Rohr 3 verbunden werden soll, kann auch das Randsegment 111a des Verformungskörpers 111 in vorteilhafter Weise ferner mit einer, beispielsweise auch mit der in der Öffnung 3" ggf. vorgesehenen Dichtfläche korrespondierenden und/oder kreisringartigen, Dichtfläche versehen sein.

Zum Kompensieren von aus allfälligen Bewegungen des Wirbelsensors - etwa infolge von Vibration der vorbezeichneten, an das Rohr angeschlossenen Rohrleitung - resultierenden Kräften und/oder Momenten bzw. zum Vermeiden von daraus resultierenden unerwünschten, nämlich das Sensorsignal s1 verfälschenden Bewegungen der Sensorfahne bzw. des Verformungskörpers 111 weist der Wirbelsensor 1 nach einer weiteren Ausgestaltung der Erfindung ferner einen sich ausgehend von der zweiten Oberfläche 111# des Verformungskörpers 111 erstreckenden, beispielsweise stab-, platten- oder hülsenförmigen, Ausgleichskörper 114 auf. Nämlicher Ausgleichskörper 114 kann zudem auch als eine Halterung des Wandlerelements 12 dienen oder auch als ein Bestandteil des Wandlerelements 12 dienen, beispielsweise als eine bewegliche Elektrode eines nämliches (kapazitives) Wandlerelement bildenden Kondensators. Der Ausgleichskörper 114 kann beispielsweise aus dem gleichen Material bestehen, wie der Verformungskörper und/oder wie die Sensorfahne, beispielsweise einem Metall. Beispielsweise kann der Ausgleichskörper 114 nämlich aus einem Edelstahl bzw. einer Nickelbasislegierung hergestellt sein. Nach einer weiteren Ausgestaltung der Erfindung sind Verformungskörper 111 und Ausgleichskörper 114 stoffschlüssig miteinander verbunden, beispielsweise miteinander verschweißt bzw. verlötet, mithin ist vorgesehen, Ausgleichskörper 114 und Verformungskörper 111 aus entsprechend stoffschlüssig miteinander verbindbaren Materialien herzustellen. Alternativ können Verformungskörper 111 und Ausgleichskörper 114 aber auch Bestandteile ein und desselben monolithischen Formteils sein, beispielsweise auch derart, daß Sensorfahne 111, Verformungskörper 112 und Ausgleichskörper 114 Bestandteile nämlichen Formteils sind. Sensorfahne 112 und Ausgleichskörper 114 können desweiteren - wie auch aus einer Zusammenschau der Fig. 4c und 4d ersichtlich - zueinander fluchtend angeordnet sein, derart, daß eine Trägheitshauptachse der Sensorfahne 112 in Verlängerung mit einer Trägheitshauptachse des Ausgleichskörpers 114 koinzidiert. Alternativ oder in Ergänzung können der Ausgleichskörper 114 und der Verformungskörper 111 zudem so positioniert und zueinander ausgerichtet sein, daß eine Trägheitshauptachse des Verformungskörpers 111 in Verlängerung mit einer Trägheitshauptachse des Ausgleichskörpers 114 koinzidiert. Darüberhinaus können Sensorfahne 112, Ausgleichskörper 114 und Verformungskörper 111 auch so positioniert und zueinander ausgerichtet sein, daß - wie beispielsweise auch aus einer Zusammenschau der Fig. 2, 4a, 4b, 4c und 4d ersichtlich - eine Trägheitshauptachse des Wirbelsensor 11 sowohl zu einer Trägheitshauptachse der Sensorfahne 112 als auch einer Trägheitshauptachse des Ausgleichskörpers 114 wie auch einer Trägheitshauptachse des Verformungskörpers 111 parallel verläuft oder sowohl mit nämlicher Trägheitshauptachse der Sensorfahne als auch mit nämlicher Trägheitshauptachse Ausgleichskörpers wie auch mit nämlicher Trägheitshauptachse des Verformungskörpers koinzidiert.

Zum Verarbeiten bzw. Auswerten des wenigstens einen Wirbelsensorsignals umfaßt das Meßsystem ferner eine - beispielsweise in einem druck- und/oder schlagfesten Schutzgehäuse 20 untergebrachte - Umformer-Elektronik 2, die an den Sensor 1 angeschlossen ist bzw. im Betrieb des Meßsystems mit dem Wirbelsensor 1 kommuniziert. Das Schutzgehäuse 20 für die Umformer-Elektronik 2 kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein. Im hier gezeigten Ausführungsbeispiel ist das Meßsystem zudem als ein Wirbel-Durchflußmeßgrät in Kompaktbauweise ausgebildet, bei dem das Schutzgehäuse 20 mit darin untergebrachter Umformer-Elektronik 2 - beispielsweise mittels eines halsförmigen Anschlußstutzen 30 - am Rohr gehaltert ist. Die - beispielsweise mittels wenigstens eines Mikroprozessors gebildete - Umformer-Elektronik 2 ist u.a. dafür eingerichtet, das Wirbelsensorsignal s1 zu empfangen und auszuwerten, nämlich zumindest anhand von dessen erster Nutzkomponente die Ablösefrequenz repräsentierende, beispielsweise digitale, Wirbelfrequenz-Meßwerte $X_f$ zu ermitteln sowie unter Verwendung eines oder mehrerer Wirbelfrequenz-Meßwerte $X_f$, beispielsweise auch digitale, Strömungsparameter-Meßwerte $X_M$, nämlich Meßwerte für den wenigstens einen Strömungsparameter zu berechnen; dies im beispielsweise derart, daß die Strömungsparameter-Meßwerte $X_M$ zumindest im Falle eines einphasigen Meßstoffs jeweils eine Berechnungsvorschrift:

$$X_M = k_1 \cdot X_f$$

erfüllen, wobei der in vorbezeichneten Berechnungsvorschrift enthaltene Koeffizient $k_1$ eine mit der eingangs erwähnten *Strouhal*-Zahl (Sr) korrespondierender, beispielsweise auch Meßsystem-Typ bzw. Meßsystem-Baureihen spezifischer, Kalibriefaktor der Umformer-Elektronik bzw. des damit gebildeten Meßsystems ist. Die Strömungsparameter-Meßwerte $X_M$ können zudem beispielsweise vor Ort visualisiert und/oder - drahtgebunden via angeschlossenen Feldbus und/oder drahtlos per Funk - an ein elektronisches Datenverarbeitungssystem, etwa eine Speicher programmierbare Steuerung (SPS) und/oder einen Prozeßleitstand (SCADA), übermittelt werden. Dementsprechend weist das Meßsystem nach einer weiteren Ausgestaltung ein mit dessen Umformer-Elektronik 2 gekoppeltes Anzeigeelement und/oder wenigstens einen Datenausgang zur Ausgabe von von der Umformer-Elektronik 2 bereitgestellten Daten - beispielsweise nämlich den Meßwerten $X_M$ für den wenigstens einen Strömungsparameter - und/oder von mittels der Umformer-Elektronik 2 generierten Meldungen auf. Nicht zuletzt für den Fall, daß in der Umformer-Elektronik 2 wenigstens ein dem Verarbeiten des Wirbelsensorsignals und dem Ermitteln von den wenigstens einen Strömungsparameter repräsentierenden digitalen Meßwerten dienlicher Mikroprozessor vorgesehen ist, kann die die Umformer-Elektronik nach einer weiteren Ausgestaltung der Erfindung wenigstens eine Wandlerschaltung A/D aufweisen, die eingerichtet ist, das wenigstens eine Wirbelsensorsignal zu empfangen und zu digitalisieren, insb. nämlich in ein digitales Wirbelsensorsignal zu wandeln und nämliches digitales Wirbelsensorsignal an einem Digitalausgang der Wandlerschaltung A/D bereitzustellen, und/oder kann Umformer-Elektronik 2 nach einer anderen Ausgestaltung der Erfindung wenigstens einen nicht-flüchtigen (Daten-)Speicher (EEPROM) zum Speichern digitaler Meß- und/oder Betriebsdaten, beispielsweise nämlich auch von Berechnungsvorschriften umsetzenden Programmen und/oder von Kalibrierkonstanten ($k_1$, $k_2$) und/oder von Schwellenwerten, aufweisen. Für den vorbezeichneten Fall, daß das Meßsystem den Temperatursensor und/oder den Drucksensor aufweist, ist die Umformer-Elektronik 2 ferner eingerichtet, auch das wenigstens eine Temperatursensorsignal bzw. das wenigstens eine Drucksensorsignal zu empfangen, und ist die Umformer-Elektronik 2 zudem auch eingerichtet, anhand des wenigstens einen Temperatursensorsignals die Temperatur des Fluids repräsentierende Temperatur-Meßwerte $X_\theta$ zu ermitteln und/oder anhand des wenigstens einen Drucksensorsignals den Druck des Fluids repräsentierende Druck-Meßwerte $X_p$ zu ermitteln. Ferner kann die Umformer-Elektronik 2 auch eingerichtet sein, die Temperatur-Meßwerte $X_\theta$ und/oder die Druck-Meßwerte $X_p$ bei der Berechnung der Strömungsparameter-Meßwerte $X_M$ zu berücksichtigen bzw. in die Berechnung der Strömungsparameter-Meßwerte $X_M$ einfließen zu lassen, beispielsweise auch für den vorbezeichneten Fall, daß die Strömungsparameter-Meßwerte $X_M$ einen Massestrom des Meßstoffs repräsentieren.

Wie bereits erwähnt, ist der Wirbelsensor bzw. das damit gebildete Meßsystem im besonderen auch dafür vorgesehen, in einer solchen Anwendung bzw. Anlage eingesetzt zu werden, bei der Meßstoff zumindest gelegentlich als eine, insb. zweiphasige, Dispersion ausgebildet ist, beispielsweise derart, daß im ansonsten flüssigen Meßstoff darin eingeschlossenes Gas mit einer, ggf. auch zeitlich veränderlichen (Volumen-)Konzentration β mitgeführt wird. Dafür ist die Umformer-Elektronik 2 ferner eingerichtet, das Wirbelsensorsignal s1 auch bezüglich von dessen zweiter Nutzkomponente auszuwerten, nämlich anhand der zweiten Nutzkomponente eine Amplitude der Resonanz-Schwingungen des Wirbelsensors 1 repräsentierende, beispielsweise auch digitale, (Resonanz-)Amplituden-Meßwerte $X_s$ zu ermitteln sowie unter Verwendung eines oder mehrerer Amplituden-Meßwerte $X_s$ zu ermitteln, zumindest qualitativ zu ermitteln, ob der Meßstoff einphasig oder aber mehrphasig ausgebildet ist, ob z.B. in einer Flüssigkeit Gaseinschlüsse (Blasen) mitgeführt sind, und/oder quantitativ zu ermitteln, in welchem Maße, beispielsweise mit welchem (Volumen-)Anteil bzw. mit welcher (Volumen-)Konzentration β, Fremdstoffe im Meßstoff enthalten sind.

Nach einer weiteren Ausgestaltung der Erfindung ist die Umformer-Elektronik 2 zudem eingerichtet, unter Verwendung wenigstens eines der Amplituden-Meßwerte $X_s$ einen Kennzahlwert $X_K$ für eine eine Beladung des Meßstoffs mit wenigstens einem Fremdstoff charakterisierende, beispielsweise nämlich einen entsprechenden Fremdstoffgehalt bzw. ein dementsprechendes Verhältnis des auf den Wirbelsensor in Detektionsrichtung bzw. in Richtung quer zur vorbezeichneten (Haupt-)Strömungsrichtung wirkenden (pulsierenden) statischen Druckes $p_{stat}$ ($p_{stat}@f_r$) zu einem in Richtung der vorbezeichneten Längsachse des Meßrohrs bzw. in (Haupt-)Strömungsrichtung auf den Wirbelsensor wirkenden (von der Strömungsgeschwindigkeit u abhängigen) dynamischen Druck $p_{dyn}$ ($p_{dyn} \sim u^2 \cdot f_V^2$), mithin einen auf den Wirbelsensor wirkenden Staudruck repräsentierende, Strömungskennzahl SK1 (Eu, σ, $c_p$) zu ermitteln; dies im besonderen auch unter Verwendung wenigstens eines der Wirbelfrequenz-Meßwerte $X_f$ und/oder derart, daß der Kennzahlwert $X_K$ eine Berechnungsvorschrift:

$$X_K = k_2 \cdot \frac{X_S \cdot}{X_f^2}$$

erfüllt, mithin das vorbezeichnete Verhältnis ($p_{stat}$ / $p_{dyn}$) von auf den Wirbelsensor wirkendem statischem Druck $p_{stat}$ zu auf den Wirbelsensor wirkendem dynamischem Druck $p_{dyn}$ quantifiziert. Bei dem in der vorbezeichneten Berechnungsvorschrift enthaltenen Koeffizienten $k_2$ handelt es sich (wie beim vorbezeichneten Koeffizienten $k_1$) ebenfalls um einen, ggf. auch Meßsystem-Typ bzw. Meßsystem-Baureihen spezifischen, Kalibrefaktor der Umformer-Elektronik bzw. des damit gebildeten Meßsystems, wobei der Koeffizient $k_2$ vorteilhaft beispielsweise auch so gewählt bzw. gesetzt sein kann, daß die Strömungskennzahl SK1 im Ergebnis einem Druckbeiwert ($c_p$) des Wirbelsensors bzw. einer Euler-Zahl (Eu) oder einer Kavitationszahl (σ) des am Wirbelsensor vorbei strömenden, insb. nämlich die Sensorfahne 112 umströmenden, Meßstoffs entspricht. Darüberhinaus kann die Umformer-Elektronik vorteilhaft auch eingerichtet sein, einen oder mehrere der Kennzahlwerte $X_K$ jeweils mit wenigstens einem, beispielsweise nämlich vorab unter Referenzbedingungen bzw. anhand des Wirbelsensorsignals s1 ermittelten, Schwellenwert TH1 zu vergleichen, der einen für das Meßsystem und/oder den Meßstoff vorgegebenen Fremdstoff-Anteil repräsentiert. Der vorbezeichnete Schwellenwert TH1 kann beispielsweise mit einem vorab unter Referenzbedingungen, nämlich für ein durch den Meßwandler mit vorgegebener bzw. bekannter Reynolds-Zahl strömendes, insb. einphasiges, Kalibrierfluid, beispielsweise (blasenfreies) Wasser, ermittelten (Referenz-)Kennzahlwert $X_k$ ($X_k$@H2O, 25°C) korrespondieren, beispielsweise nämlich diesem (Referenz-)Kennzahlwert $X_k$ entsprechen oder auch während der Laufzeit des Meßsystems durch Multiplikation eines solchen (Referenz-)Kennzahlwerts mit einer zweiten Potenz ($X_f^2$) eines jeweils aktuellen Wirbelfrequenz-Meßwerts $X_f$ an die jeweils aktuelle Strömungsgeschwindigkeit angepaßt werden, und/oder derart gewählt sein, daß er einen maximal zulässigen und/oder kritischen Fremdstoff-Anteil repräsentiert. Entsprechend kann die Umformer-Elektronik 2 ferner auch eingerichtet sein, den Schwellenwert TH1 anhand des Wirbelsensorsignals s1, beispielsweise auch anhand von (unter Referenzbedingungen) ermittelten Amplituden-Meßwerten $X_s$ und ggf. auch anhand von (gleichermaßen unter Referenzbedingungen) ermittelten Frequenz-Meßwerten $X_f$, zu berechnen, beispielsweise auch im Zuge einer (Erst-)Kalibrierung beim Hersteller des Meßsystems und/oder einer (Re-)Kalibrierung vor Ort, und/oder den Schwellenwert TH1 im vorbezeichneten nicht-flüchtigen Speicher (EEPROM). Alternativ oder in Ergänzung kann die Umformer-Elektronik 2 zudem auch eingerichtet sein, eine, beispielsweise auch als Alarm deklarierte, Meldung auszugeben, falls einer oder mehrere der Kennzahlwerte $X_K$ den wenigstens einen Schwellenwert TH1 überschritten hat. Die Meldung kann beispielsweise vor Ort akustisch und/oder visuell wahrnehmbar ausgegeben werden, etwa mittels des vorbezeichneten Anzeigeelements, und/oder in ein, beispielsweise an das vorbezeichnete Datenverarbeitungssystem übermitteltes, Datensignal codiert sein.

Darüberhinaus können die Kennzahlwerte $X_K$ auch bei der Berechnung der Strömungsparameter-Meßwerte $X_M$ berücksichtig, beispielsweise nämlich in die Berechnung einfließen gelassen werden. Dementsprechend ist die Umformer-Elektronik 2 nach einer eingerichtet, die Strömungsparameter-Meßwerte $X_M$ zumindest im Falle eines zweiphasigen bzw. mit Fremdstoff beladenen Meßstoffs jeweils auch unter Verwendung eines oder mehrerer der vorbezeichneten Kennzahlwerte $X_K$ zu berechnen, insb. derart, daß die Strömungsparameter-Meßwerte $X_M$ eine Berechnungsvorschrift:

$$X_M = X_K \cdot X_f$$

erfüllen. Alternativ oder in Ergänzung kann die Umformer-Elektronik 2 aber auch eingerichtet sein, die Strömungsparameter-Meßwerte $X_M$ zumindest im Falle eines zweiphasigen bzw. mit Fremdstoff beladenen Meßstoffs jeweils auch direkt unter Verwendung eines oder mehrerer Amplituden-Meßwerte $X_s$ zu berechnen, insb. derart, daß die Strömungsparameter-Meßwerte $X_M$ eine Berechnungsvorschrift:

$$X_M = k_M \cdot \frac{X_S \cdot}{X_f}$$

erfüllen.

Zum Verarbeiten des Wirbelsensorsignals weist die Umformer-Elektronik 2 nach einer weiteren Ausgestaltung ein, beispielsweise als Komponente der vorbezeichneten Wandlerschaltung A/D ausgebildetes, erstes Signalfilter auf, das dafür eingerichtet ist, an einem Signaleingang das Wirbelsensorsignal zu empfangen und an einem Filterausgang ein die erste Nutzkomponente des Wirbelsensorsignals enthaltendes, insb. nämlich die zweite Nutzkomponente stets nur abgeschwächt oder nicht enthaltendes, erstes Nutzsignal bereitzustellen. Ferner kann die Umformer-Elektronik auch eingerichtet sein, unter Verwendung nämlichen - beispielsweise auch digitalen - ersten Nutzsignals die Wirbelfrequenz-Meßwerte $X_f$ *zu ermitteln*. Alternativ oder in Ergänzung weist die Umformer-Elektronik 2 ferner ein, beispielsweise als Komponente der vorbezeichneten Wandlerschaltung A/D ausgebildetes, zweites Signalfilter auf, das dafür eingerichtet ist, an einem Signaleingang das Wirbelsensorsignal zu empfangen und an einem Filterausgang ein die zweite Nutzkomponente des Wirbelsensorsignals enthaltendes, insb. nämlich die erste Nutzkomponente stets nur abgeschwächt oder nicht enthaltendes, zweites Nutzsignal bereitzustellen. Unter Verwendung des - beispielsweise digitalen - zweiten Nutzsignals kann ferner eingerichtet sein, die (Resonanz-)Amplituden-Meßwerte Xs zu ermitteln. Alternativ oder in Ergänzung kann die Umformer-Elektronik 2 auch eingerichtet sein, eine diskrete Fourier-Transformation (DFT) und/oder eine Autokorrelation (AKF) des wenigstens einen Wirbelsensorsignals zu generieren, um hernach basierend auf nämlicher diskreter Fourier-Transformation des wenigstens einen Wirbelsensorsignals bzw. basierend auf nämlicher Autokorrelation (AKF) des wenigstens Wirbelsensorsignals einen oder mehrere der Wirbelfrequenz-Meßwerte $X_f$ und/oder einen oder mehrere der (Resonanz-)Amplituden-Meßwerte $X_s$ zu ermitteln.

**Patentansprüche**

1. Meßsystem zum Messen wenigstens eines, insb. zeitlich veränderlichen, Strömungsparameters, insb. einer Strömungsgeschwindigkeit und/oder einer Volumenstrom und/oder einer Massenstrom, eines in einer Rohrleitung strömenden, insb. zumindest gelegentlich einphasigen und/oder zumindest gelegentlich mehrphasigen, fluiden Meßstoffs, insb. nämlich eines Gases, einer Flüssigkeit oder einer Dispersion, welches Meßsystem umfaßt:

   - ein in den Verlauf nämlicher Rohrleitung einsetzbares Rohr (3) mit einem Lumen (3'), das dafür eingerichtet ist, den in der Rohrleitung strömende Meßstoff zu führen bzw. von nämlichem Meßstoff durchströmt zu werden;
   - einen im Lumen des Rohrs (3) angeordneten, insb. prismatischen oder zylindrischen, Staukörper (4), der dafür eingerichtet ist, im daran vorbei strömenden Meßstoff Wirbel mit einer von einer momentanen Strömungsgeschwindigkeit, u, nämlichen Meßstoffs abhängigen Ablösefrequenz, $f_V$ ($f_V \sim u$), zu generieren, derart, daß im stromabwärts des Staukörpers strömenden Fluid eine Kármánsche Wirbelstrasse ausgebildet ist;
   - einen stromabwärts des Staukörpers angeordneten Wirbelsensor (1),

      -- der wenigstens eine, insb. niedrigste und/oder stets oberhalb der Ablösefrequenz liegende, mechanische Resonanzfrequenz, $f_R$, aufweist
      -- und der eingerichtet ist, angeregt vom strömenden Meßstoff, mechanische Schwingungen um eine statische Ruhelage auszuführen und wenigstens ein nämliche Schwingungen repräsentierendes, insb. elektrisches oder optisches, Wirbelsensorsignal (s1) bereitzustellen,

      --- das eine erste Nutzkomponente ($s1_{N1}$), nämlich eine Schwingungen des Wirbelsensors (1) mit der Ablösefrequenz, $f_v$, repräsentierende - insb. eine nicht unter einem dafür vorgegebenen Schwellenwert für Signalrauschen liegenden Signalpegel aufweisende - erste spektrale Signalkomponente (Wirbelkomponente) enthält,
      --- und das eine zweite Nutzkomponente ($s1_{N2}$), nämlich eine Resonanz-Schwingungen des Wirbelsensors (1) mit dessen mechanischer Resonanzfrequenz, $f_R$, repräsentierende - insb. eine nicht unter einem dafür vorgegebenen Schwellenwert für Signalrauschen liegenden Signalpegel aufweisende - zweite spektrale Signalkomponente (Resonanzkomponente) enthält;

   - sowie eine, insb. mittels wenigstens eines Mikroprozessors gebildete, Umformer-Elektronik (2) zum Auswerten des wenigstens einen Wirbelsensorsignals und zum Ermitteln von, insb. digitalen, Meßwerten ($X_M$) für den wenigstens einen Strömungsparameter;
   - wobei die Umformer-Elektronik (2) eingerichtet ist, das wenigstens eine Wirbelsensorsignal zu empfangen und auszuwerten, nämlich zumindest

      -- anhand der ersten Nutzkomponente des wenigstens einen Wirbelsensorsignals die Ablösefrequenz repräsentierende, insb. digitale, Wirbelfrequenz-Meßwerte ($Xf$) zu ermitteln
      -- sowie anhand der zweiten Nutzkomponente des wenigstens einen Wirbelsensorsignals eine Amplitude der Resonanz-Schwingungen des Wirbelsensors (1) repräsentierende, insb. digitale, Amplituden-Meßwerte ($Xs$) zu ermitteln;

   - und wobei die Umformer-Elektronik (2) eingerichtet ist,

      -- unter Verwendung eines oder mehrerer Amplituden-Meßwerte ($Xs$)

         --- zu ermitteln, ob und/oder inwieweit im Meßstoff Fremdstoffe, insb. in einer Flüssigkeit mitgeführte Gaseinschlüsse (Blasen), enthalten sind und/oder
         --- zu ermitteln, ob der Meßstoff ein- oder mehrphasig ausgebildet ist,

-- sowie unter Verwendung eines oder mehrerer Wirbelfrequenz-Meßwerte (Xf), insb. digitale, Strömungsparameter-Meßwerte ($X_M$), nämlich Meßwerte für den wenigstens einen Strömungsparameter zu berechnen, insb. derart, daß die Strömungsparameter-Meßwerte ($X_M$) zumindest im Falle eines einphasigen Meßstoffs jeweils eine Berechnungsvorschrift:

$$XM = kM \cdot Xf$$

erfüllen.

2. Meßsystem nach einem der vorherigen Ansprüche, wobei die Umformer-Elektronik (2) eingerichtet, ist die Strömungsparameter-Meßwerte ($X_M$) auch unter Verwendung einer Strouhal-Zahl, Sr (Sr ~ $f_V$ / u), nämlich einer ein Verhältnis der Ablösefrequenz, $f_V$, zur Strömungsgeschwindigkeit, u, des am Staukörper vorbei strömenden Fluids repräsentierenden Kennzahl zu berechnen.

3. Meßsystem nach einem der vorherigen Ansprüche, wobei die Umformer-Elektronik (2) eingerichtet ist, die Strömungsparameter-Meßwerte ($X_M$) zumindest im Falle eines zweiphasigen Meßstoffs jeweils auch unter Verwendung eines oder mehrerer Amplituden-Meßwerte (Xs) zu berechnen, insb. derart, daß die Strömungsparameter-Meßwerte ($X_M$) eine Berechnungsvorschrift:

$$X_M = k_M \cdot \frac{Xs \cdot}{Xf}$$

erfüllen.

4. Meßsystem nach einem der vorherigen Ansprüche, wobei die Umformer-Elektronik (2) eingerichtet ist, unter Verwendung wenigstens eines der Amplituden-Meßwerte, insb. auch unter Verwendung wenigstens eines der Wirbelfrequenz-Meßwerte (Xf), einen Kennzahlwert (XK) für eine ein Verhältnis eines in eine quer zu einer gedachten Längsachse des Meßrohrs verlaufenden Richtung auf den Wirbelsensor wirkenden statischen Druckes ($p_{stat}$) zu einem auf den Wirbelsensor in Richtung der gedachten Längsachse des Meßrohrs wirkenden dynamischen Druck ($p_{dyn}$) charakterisierende Strömungskennzahl (SK1) zu berechnen, insb. derart, daß der Kennzahlwert ($X_K$) eine Berechnungsvorschrift:

$$X_K = k_K \cdot \frac{Xs \cdot}{X_f^2}$$

erfüllt und/oder daß die Strömungskennzahl (SK1) einem Druckbeiwert des Wirbelsensors, einer Euler-Zahl oder einer Kavitationszahl des Meßstoffs entspricht.

5. Meßsystem nach dem vorherigen Anspruch, wobei die Umformer-Elektronik (2) eingerichtet ist, den Kennzahlwert ($X_K$) mit wenigstens einem, insb. vorab unter Referenzbedingungen und/oder anhand des Wirbelsensorsignals (s1) ermittelten, Schwellenwert (TH1) zu vergleichen, der einen für das Meßsystem und/oder den Meßstoff vorgegebenen, insb. maximal zulässigen und/oder kritischen, Fremdstoff-Anteil repräsentiert.

6. Meßsystem nach dem vorherigen Anspruch,

- wobei die Umformer-Elektronik (2) eingerichtet ist, den Schwellenwert anhand des Wirbelsensorsignals (s1), insb. nämlich unter Verwendung wenigstens eines der Wirbelfrequenz-Meßwerte ($X_f$), zu ermitteln; und/oder
- wobei der wenigstens eine Schwellenwert (TH1) mit einem vorab unter Referenzbedingungen, insb. für ein durch den Meßwandler strömendes und/oder einphasiges Kalibrierfluid, ermittelten Kennzahlwert ($X_K$) korrespondiert, insb. nämlichem Kennzahlwert ($X_K$) entspricht; und/oder
- wobei die Umformer-Elektronik (2) eingerichtet ist, eine, insb. vor Ort visuell und/oder akustisch wahrnehmbare und/oder in ein Datensignal codierte und/oder als Alarm deklarierte, Meldung auszugeben, falls der den Kennzahlwert ($X_K$) den wenigstens einen Schwellenwert (TH1) überschritten hat.

7. Meßsystem nach einem der vorherigen Ansprüche,

- wobei die Umformer-Elektronik (2) ein erstes Signalfilter aufweist, das dafür eingerichtet ist, an einem Signaleingang das Wirbelsensorsignal zu empfangen und an einem Filterausgang ein die erste Nutzkomponente des Wirbelsensorsignals enthaltendes, insb. nämlich die zweite Nutzkomponente stets nur abgeschwächt oder nicht enthaltendes, erstes, insb. digitales, Nutzsignal bereitzustellen; und/oder
- wobei die Umformer-Elektronik (2) ein zweites Signalfilter aufweist, das dafür eingerichtet ist, an einem Signaleingang das Wirbelsensorsignal zu empfangen und an einem Filterausgang ein die zweite Nutzkomponente des Wirbelsensorsignals enthaltendes, insb. nämlich die erste Nutzkomponente stets nur abgeschwächt oder nicht enthaltendes, zweites, insb. digitales, Nutzsignal bereitzustellen.

8. Meßsystem nach dem vorherigen Anspruch,

   - wobei die Umformer-Elektronik (2) eingerichtet ist, die Wirbelfrequenz-Meßwerte (Xf) unter Verwendung des ersten Nutzsignals zu ermitteln; und/oder
   - wobei die Umformer-Elektronik (2) eingerichtet ist, die Amplituden-Meßwerte (Xs) unter Verwendung des zweiten Nutzsignals zu ermitteln.

9. Meßsystem nach einem der vorherigen Ansprüche,

   - wobei die Umformer-Elektronik (2) eingerichtet ist, eine diskrete Fourier-Transformation (DFT) des wenigstens einen Wirbelsensorsignals zu generieren,
   - und wobei die Umformer-Elektronik (2) eingerichtet ist, die Wirbelfrequenz-Meßwerte (Xf) und/oder die Amplituden-Meßwerte (Xs) basierend auf nämlicher diskreter Fourier-Transformation (DFT) des wenigstens einen Wirbelsensorsignals zu ermitteln.

10. Meßsystem nach einem der vorherigen Ansprüche,

    - wobei die Umformer-Elektronik (2) eingerichtet ist, eine Autokorrelation (AKF) des wenigstens einen Wirbelsensorsignals zu berechnen,
    - und wobei die Umformer-Elektronik (2) eingerichtet ist, die Wirbelfrequenz-Meßwerte (Xf) basierend auf nämlicher Autokorrelation (AKF) des wenigstens einen Wirbelsensorsignals zu ermitteln.

11. Meßsystem nach einem der vorherigen Ansprüche, wobei die Umformer-Elektronik (2) wenigstens eine Wandlerschaltung (A/D) aufweist, die eingerichtet ist, das wenigstens eine Wirbelsensorsignal zu empfangen und zu digitalisieren, insb. nämlich in ein digitales Wirbelsensorsignal zu wandeln und nämliches digitales Wirbelsensorsignal an einem Digitalausgang der Wandlerschaltung bereitzustellen.

12. Meßsystem nach einem der vorherigen Ansprüche,

    - wobei der Wirbelsensor einen, insb. membranartigen und/oder scheibenförmigen, Verformungskörper mit einer dem Lumen zugewandten ersten Oberfläche und einer gegenüberliegenden, insb. zur ersten Oberfläche zumindest teilweise parallelen, zweiten Oberfläche aufweist,
    - und wobei der Wirbelsensor wenigstens ein oberhalb und/oder auf der zweiten Oberfläche des Verformungskörper angeordnetes, insb. nämlich am Verformungskörper angebrachtes und/oder in dessen Nähe positioniertes, Wandlerelement aufweist, das dafür eingerichtet ist, Bewegungen des Verformungskörpers, insb. von dessen zweiter Oberfläche, zu erfassen und in das Wirbelsensorsignal zu wandeln.

13. Meßsystem nach dem vorherigen Anspruch, wobei der Wirbelsensor eine sich ausgehend von der ersten Oberfläche des Verformungskörpers bis zu einem distalen Ende erstreckende, insb. plattenförmige oder keilförmige, Sensorfahne aufweist.

14. Meßsystem nach einem der vorherigen Ansprüche, weiters umfassend: ein mit der Umformer-Elektronik (2) gekoppeltes Anzeigeelement zur Ausgabe von von der Umformer-Elektronik (2) bereitgestellten Meßwerten ($X_M$) für den wenigstens einen Strömungsparameter und/oder von mittels der Umformer-Elektronik (2) generierten Meldungen.

## Claims

1. A measuring system for measuring at least one, in particular time-variable, flow parameter, in particular a flow velocity and/or a volume flow, and/or a mass flow, of a fluid measured substance flowing in a pipeline, in particular one which is at least occasionally single-phase and/or at least occasionally multiphase, that is to say, in particular, a gas, a liquid, or a dispersion, said measuring system comprising:

   - A tube (3) which can be inserted into the path of said pipeline with a lumen (3'), which is configured to conduct the measured substance flowing in the pipeline, or to have said measured substance flow through it;
   - an, in particular prismatic or cylindrical, damming body (4) arranged in the lumen of the tube (3), which is configured to generate in the measured substance that flows past it vortices with a vortex shedding frequency, $f_V$ ($f_V \sim u$), depending on a momentary flow velocity, u, of said measured substance, in such a way that a Kármán vortex street is formed in the fluid downstream of the damming body;
   - a vortex sensor (1) arranged downstream of the damming body,

     -- which has at least one mechanical resonant frequency, $f_R$, in particular a lowest one and/or one which is always above the vortex shedding frequency,
     -- and which is configured to perform mechanical oscillations around a static resting position initiated by the flowing measured substance, and to supply at least one, in particular electrical or optical, vortex sensor signal (s1) representing said oscillations,
     -- which contains a first useful component

($s1_{N1}$), that is to say a first spectral signal component (vortex component) representing oscillations of the vortex sensor (1) with the vortex shedding frequency, $f_V$ - in particular having a signal level which is not below a specified threshold value for signal noise,

-- and which contains a second useful component ($s1_{N2}$), that is to say a second spectral signal component (resonant component) representing resonant oscillations of the vortex sensor (1) with its mechanical resonant frequency, $f_R$ - in particular having a signal level which is not below a specified threshold value for signal noise;

- and converter electronics (2), in particular formed by at least one microprocessor, for analyzing the at least one vortex sensor signal and for determining, in particular digital, measured values ($X_M$) for the at least one flow parameter;
- wherein the converter electronics (2) are configured to receive and analyze the at least one vortex sensor signal, that is to say, at least

   -- to determine, in particular digital, vortex shedding frequency measured values ($X_f$) representing the vortex shedding frequency using the first useful component of the at least one vortex sensor signal
   -- and to determine, in particular digital, amplitude measured values ($X_s$) representing an amplitude of the resonant oscillations of the vortex sensor (1) using the second useful component of the at least one vortex sensor signal;

- and wherein the converter electronics (2) are configured,

   -- using one or more amplitude measured values ($X_s$),

      --- to determine whether and/or to what extent there are foreign substances in the measured substance, in particular in entrained gas (bubbles) transported in a liquid and/or
      --- to determine whether the measured substance is made up of a single phase or multiple phases,

   -- and to calculate, in particular digital, flow parameter measured values ($X_M$), that is to say measured values for the at least one flow parameter, using one or more vortex shedding frequency measured values ($X_f$), in particular in such a way that each flow parameter measured value ($X_M$) satisfies a calculation rule, at least in the case of a single-phase measured substance:

$$X_M = k_M X_f.$$

2. The measuring system as claimed in one of the preceding claims, wherein the converter electronics (2) are configured to calculate the flow parameter measured values ($X_M$), also using a Strouhal number, Sr (Sr ~ $f_V$ / u), that is to say a characterizing number representing a ratio of the vortex shedding frequency, $f_v$, to the flow velocity, u, of the fluid flowing past the damming body.

3. The measuring system as claimed in one of the preceding claims, wherein the converter electronics (2) are configured to calculate the flow parameter measured values ($X_M$) at least in the case of a two-phase measured substance, in each case also using one or more amplitude measured values ($X_s$), in particular in such a way that the flow parameter measured values ($X_M$) satisfy a calculation rule:

$$X_M = k_M \frac{X_s}{X_f}.$$

4. The measuring system as claimed in one of the preceding claims, wherein the converter electronics (2) are configured to calculate, using at least of the amplitude measured values, in particular also using at least one of the vortex shedding frequency measured values ($X_f$), a characterizing number value (XK) for a flow characterizing number (SK1) characterizing a ratio of a static pressure ($p_{stat}$) acting on the vortex sensor in a direction running perpendicular to an imaginary longitudinal axis of the measuring tube to a dynamic pressure ($p_{dyn}$) acting on the vortex sensor in the direction of the imaginary longitudinal axis of the measuring tube, in particular in such a way that the characterizing number value (XK) satisfies a calculation rule:

$$X_K = k_K \frac{X_s}{X_f^2}$$

and/or in such a way that the flow characterizing number (SK1) corresponds to a pressure coefficient of the vortex sensor, a Euler's number, or a cavitation number of the measured substance.

5. The measuring system as claimed in the preceding claim, wherein the converter electronics (2) are configured to compare the characterizing number value ($X_K$) with at least one threshold value (TH1), in particular determined in advance under reference conditions and/or determined using the vortex sensor signal (s1), which represents a foreign substance content specified for the measuring system and/or the measured substance, in particular a maximum permissible and/or critical foreign substance content.

6. The measuring system as claimed in the preceding claim,

- wherein the converter electronics (2) are configured to determine the threshold value based on the vortex sensor signal (s1), that is to say, in particular, using at least one of the vortex shedding frequency measured values ($X_f$); and/or
- wherein the at least one threshold value (TH1) corresponds to a characterizing number value ($X_K$) determined in advance under reference conditions, in particular for a calibration fluid flowing through the measuring transducer and/or a single-phase calibration fluid, that is to say, in particular, is identical to said characterizing number value ($X_K$); and/or
- wherein the converter electronics (2) are configured to output a notification, in particular one which can be perceived visually and/or acoustically on site and/or one which is coded into a data signal and/or is declared as an alarm, in the event that the characterizing number value ($X_K$) has exceeded the at least one threshold value (TH1).

7. The measuring system as claimed in one of the preceding claims,

- wherein the converter electronics (2) have a first signal filter, which is configured to receive the vortex sensor signal at a signal input and to supply a first, in particular digital, useful signal containing the first useful component of the vortex sensor signal, that is to say, in particular, only ever containing the second useful component attenuated or not containing it at all, at a filter output; and/or
- wherein the converter electronics (2) have a second signal filter, which is configured to receive the vortex sensor signal at a signal input and to supply a second, in particular digital, useful signal containing the second useful component vortex sensor signal, that is to say, in particular, only ever containing the first useful component attenuated or not containing it at all, at a filter output.

8. The measuring system as claimed in the preceding claim,

- wherein the converter electronics (2) are configured to determine the vortex shedding frequency measured values ($X_f$) using the first useful signal; and/or
- wherein the converter electronics (2) are configured to determine the amplitude measured values ($X_s$) using the second useful signal.

9. The measuring system as claimed in one of the preceding claims,

- wherein the converter electronics (2) are configured to generate a discrete Fourier transform (DFT) of the at least one vortex sensor signal,
- and wherein the converter electronics (2) are configured to determine the vortex shedding frequency measured values ($X_f$)

and/or the amplitude measured values ($X_s$) based on said discrete Fourier transform (DFT) of the at least one vortex sensor signal.

10. The measuring system as claimed in one of the preceding claims,

- wherein the converter electronics (2) are configured to calculate an autocorrelation (AKF) of the at least one vortex sensor signal,
- and wherein the converter electronics (2) are configured to determine the vortex shedding frequency measured values ($X_f$) based on said autocorrelation (AKF) of the at least one vortex sensor signal.

11. The measuring system as claimed in one of the preceding claims, wherein the converter electronics (2) have at least one converter circuit (A/D), which is configured to receive the at least one vortex sensor signal and to digitize it, that is to say, in particular, to convert it into a digital vortex sensor signal and to supply said digital vortex sensor signal at a digital output of the converter circuit.

12. The measuring system as claimed in one of the preceding claims,

- wherein the vortex sensor has an, in particular membrane-like and/or disk-shaped, deformation body with a first surface facing toward the lumen and a second surface opposite it, in particular at least partially parallel to the first surface,
- and wherein the vortex sensor has at least one converter element arranged above and/or on the second surface of the deformation body, that is to say, in particular, attached to the deformation body and/or positioned near it, which is configured to detect movements of the deformation body, in particular of its second surface, and convert these into the vortex sensor signal.

**13.** The measuring system as claimed in the preceding claim, wherein the vortex sensor has an, in particular plate-shaped or wedge-shaped, sensor flag starting at the first surface of deformation body and extending to a distal end.

**14.** The measuring system as claimed in one of the preceding claims, further comprising: A display element coupled with the converter electronics (2) for outputting measured values ($X_M$) supplied by the converter electronics (2) for the at least one flow parameter and/or notifications generated using the converter electronics (2).

**Revendications**

**1.** Système de mesure destiné à la mesure d'au moins un paramètre d'écoulement, notamment variable dans le temps, notamment une vitesse d'écoulement et/ou un débit volumique et/ou un débit massique, d'un produit fluide s'écoulant dans une conduite, lequel produit est notamment au moins occasionnellement monophasique et/ou au moins occasionnellement multiphasique, notamment à savoir un gaz, un liquide ou une dispersion, lequel système de mesure comprend :

- un tube (3) pouvant être inséré dans le tracé de ladite conduite, avec un canal intérieur (3') conçu pour guider le produit s'écoulant dans la conduite ou pour être traversé par ledit produit ;
- un corps de retenue (4), notamment prismatique ou cylindrique, disposé dans le canal intérieur du tube (3), lequel corps est conçu pour générer, dans le produit qui s'écoule, des tourbillons avec une fréquence de détachement, $f_v$, ($f_v \sim u$), de telle sorte qu'une allée de tourbillons selon Karman se forme dans le produit qui s'écoule en aval du corps de retenue ;
- un capteur de vortex (1) disposé en aval du corps de retenue,

-- lequel capteur présente au moins une fréquence de résonance mécanique, $f_R$, notamment la plus basse et/ou toujours supérieure à la fréquence de détachement
-- et lequel capteur est conçu pour exécuter, sous l'effet du produit en écoulement, des vibrations mécaniques autour d'une position de repos statique et pour fournir au moins un signal de capteur de vortex (s1), notamment électrique ou optique, représentant lesdites vibrations,

--- lequel signal contient une première composante utile ($s1_{N1}$), à savoir une première composante spectrale du signal (composante de vortex) représentant les vibrations du capteur de vortex (1) avec la fréquence de détachement, $f_v$, et laquelle composante présente notamment un niveau de signal qui n'est pas inférieur à une valeur seuil prédéfinie pour le bruit du signal,
--- et lequel signal contient une deuxième composante utile ($s1_{N2}$), à savoir une deuxième composante spectrale du signal (composante de résonance) représentant les vibrations de résonance du capteur de vortex (1) avec sa fréquence de résonance mécanique, $f_R$, et laquelle composante présente notamment un niveau de signal qui n'est pas inférieur à une valeur seuil prédéfinie pour le bruit du signal ;

- ainsi qu'une électronique de transmetteur (2), laquelle électronique est formée notamment au moyen d'au moins un microprocesseur, laquelle électronique est destinée à évaluer le signal d'au moins un capteur de vortex et à déterminer des valeurs mesurées ($X_M$), notamment numériques, pour l'au moins un paramètre d'écoulement ;
- l'électronique de transmetteur (2) étant conçue pour recevoir et évaluer l'au moins un signal du capteur de vortex, à savoir

-- pour déterminer, au moins à l'aide de la première composante utile de l'au moins un signal du capteur de vortex, des valeurs mesurées de fréquence vortex (Xf), notamment numériques, représentant la fréquence de détachement
-- ainsi que pour déterminer, au moins à l'aide de la deuxième composante utile de l'au moins un signal du capteur de vortex, des valeurs mesurées d'amplitude (Xs), notamment numériques, représentant une amplitude des vibrations de résonance du capteur de vortex (1) ;

- et l'électronique de transmetteur (2) étant conçue

-- à l'aide d'une ou plusieurs valeurs mesurées d'amplitude (Xs)

--- pour déterminer si et/ou dans quelle mesure le produit contient des substances étrangères, notamment des inclusions gazeuses (bulles) entraînées dans un liquide, et/ou
--- pour déterminer si le produit à mesurer est monophasique ou multiphasique,

-- ainsi qu'à l'aide d'une ou plusieurs valeurs mesurées de fréquence vortex (Xf), notamment numériques, pour calculer des valeurs mesurées de paramètre d'écoulement ($X_M$), à savoir des valeurs mesurées pour l'au moins un paramètre d'écoulement, notamment de telle sorte que les valeurs mesurées de paramètre d'écoulement ($X_M$) satisfont chacune, au moins dans le cas d'un produit monophasique, à la règle de calcul suivante :

$$XM = kM \cdot Xf.$$

2. Système de mesure selon la revendication précédente, pour lequel l'électronique de transmetteur (2) est conçue pour calculer également les valeurs mesurées de paramètre d'écoulement ($X_M$) en utilisant un nombre de Strouhal, Sr (Sr ~ $f_v$ / u), à savoir un indice représentant un rapport entre la fréquence de détachement, $f_v$, et la vitesse d'écoulement, u, du fluide s'écoulant le long du corps de retenue.

3. Système de mesure selon l'une des revendications précédentes, pour lequel l'électronique de transmetteur (2) est conçue pour calculer les valeurs mesurées de paramètre d'écoulement ($X_M$) au moins dans le cas d'un produit diphasique, en utilisant également une ou plusieurs valeurs mesurées d'amplitude (Xs), notamment de telle sorte que les valeurs mesurées de paramètre d'écoulement ($X_M$) satisfont à la règle de calcul suivante :

$$X_M = k_M \cdot \frac{X_s}{X_f} .$$

4. Système de mesure selon l'une des revendications précédentes, pour lequel l'électronique de transmetteur (2) est conçue - en utilisant au moins l'une des valeurs mesurées d'amplitude, notamment également au moins l'une des valeurs mesurées de fréquence vortex ($X_f$) - pour calculer une valeur d'indice ($X_K$) pour un indice d'écoulement (SK1) caractérisant un rapport entre une pression statique ($p_{stat}$) agissant sur le capteur de vortex dans une direction transversale à un axe longitudinal imaginaire du tube de mesure et une pression dynamique ($p_{dyn}$) agissant sur le capteur de vortex dans la direction de l'axe longitudinal imaginaire du tube de mesure, notamment de telle sorte que la valeur d'indice ($X_K$) satisfait à la règle de calcul suivante :

$$X_K = k_K \cdot \frac{X_s}{X_f^2}$$

et/ou que l'indice d'écoulement (SK1) corresponde à un coefficient de pression du capteur de vortex, à un nombre d'Euler ou à un nombre de cavitation du produit mesuré.

5. Système de mesure selon la revendication précédente, pour lequel l'électronique de transmetteur (2) est conçue pour comparer la valeur d'indice ($X_K$) à au moins une valeur seuil (TH1) déterminée, notamment à l'avance dans des conditions de référence et/ou à l'aide du signal du capteur de vortex (s1), lequel représente une proportion de substances étrangères prédéfinie pour le système de mesure et/ou le produit à mesurer, notamment une proportion maximale admissible et/ou critique.

6. Système de mesure selon la revendication précédente,

   - pour lequel l'électronique de transmetteur (2) est conçue pour déterminer la valeur seuil à partir du signal du capteur de vortex (s1), notamment en utilisant au moins l'une des valeurs mesurées de la fréquence vortex ($X_f$) ; et/ou
   - pour lequel l'au moins une valeur seuil (TH1) correspond à une valeur d'indice ($X_K$) déterminée au préalable dans des conditions de référence, notamment pour un fluide d'étalonnage monophasé et/ou s'écoulant à travers le transducteur, notamment correspondant à ladite valeur d'indice ($X_K$) ; et/ou
   - pour lequel l'électronique de transmetteur (2) est conçue pour émettre un message, notamment perceptible visuellement et/ou acoustiquement sur place et/ou codé dans un signal de données et/ou déclaré comme alarme, si la valeur d'indice ($X_K$) a dépassé l'au moins une valeur seuil (TH1).

7. Système de mesure selon l'une des revendications précédentes,

   - pour lequel l'électronique de transmetteur (2) comprend un premier filtre de signal, lequel filtre est conçu pour recevoir le signal du capteur de vortex à une entrée de signal et pour fournir à une sortie de filtre un premier signal utile, notamment numérique, contenant la première composante utile du signal du capteur de vortex, notamment la deuxième composante utile toujours atténuée ou non contenue ; et/ou
   - pour lequel l'électronique de transmetteur (2) comprend un deuxième filtre de signal, lequel filtre est conçu pour recevoir le signal du capteur de vortex à une entrée de signal et pour fournir à une sortie de filtre un deuxième signal utile, notamment numérique, contenant la deuxième composante utile du signal du capteur de vortex, notamment la première composante utile toujours atténuée ou non contenue.

8. Système de mesure selon la revendication précédente,

   - pour lequel l'électronique de transmetteur (2) est conçue pour déterminer les valeurs mesurées de fréquence vortex (Xf) à l'aide du premier signal utile ; et/ou
   - pour lequel l'électronique de transmetteur (2) est conçue pour déterminer les valeurs mesurées d'amplitude (Xs) à l'aide du deuxième signal utile.

9. Système de mesure selon l'une des revendications précédentes,

   - pour lequel l'électronique de transmetteur (2) est conçue pour générer une transformée de Fourier discrète (DFT) de l'au moins un signal de capteur de vortex,
   - et pour lequel l'électronique de transmetteur (2) est conçue pour déterminer les valeurs mesurées de fréquence vortex (Xf) et/ou les valeurs mesurées d'amplitude (Xs) sur la base de ladite transformée de Fourier discrète (DFT) de l'au moins un signal de capteur de vortex.

10. Système de mesure selon l'une des revendications précédentes,

    - pour lequel l'électronique de transmetteur (2) est conçue pour calculer une autocorrélation (AKF) de l'au moins un signal de capteur de vortex,
    - et pour lequel l'électronique de transmetteur (2) est conçue pour déterminer les valeurs mesurées de fréquence vortex (Xf) sur la base de ladite autocorrélation (AKF) de l'au moins un signal de capteur de vortex.

11. Système de mesure selon l'une des revendications précédentes, pour lequel l'électronique de transmetteur (2) comprend au moins un circuit de transducteur (A/N), lequel est conçu pour recevoir et numériser au moins un signal de capteur de vortex, notamment pour le convertir en un signal de capteur de vortex numérique, et pour fournir ledit signal de capteur de vortex numérique à une sortie numérique du circuit de transducteur.

12. Système de mesure selon l'une des revendications précédentes,

    - pour lequel le capteur de vortex comporte un corps déformable, notamment de type membrane et/ou en forme de disque, lequel corps présente une première surface tournée vers le canal intérieur et une deuxième surface opposée, notamment au moins partiellement parallèle à la première surface,
    - et pour lequel le capteur de vortex comporte au moins un élément transducteur disposé au-dessus et/ou sur la deuxième surface du corps déformable, notamment fixé au corps déformable et/ou positionné à proximité de celui-ci, lequel élément est conçu pour détecter les mouvements du corps déformable, notamment de sa deuxième surface, et pour les convertir en signal du capteur de vortex.

13. Système de mesure selon la revendication précédente, pour lequel le capteur de vortex comporte une languette de capteur s'étendant de la première surface du corps déformable jusqu'à une extrémité distale, notamment en forme de plaque ou de coin.

14. Système de mesure selon l'une des revendications précédentes, comprenant en outre : un élément d'affichage couplé à l'électronique de transmetteur (2) pour délivrer des valeurs mesurées ($X_M$) fournies par l'électronique de transmetteur (2) pour l'au moins un paramètre d'écoulement et/ou des messages générés par l'électronique de transmetteur (2).

Fig. 1

Fig. 2

Fig. 3

11

113

111

112

**Fig. 4a**

B

A

112

111

111+

r

A

B

**Fig. 4b**

113

111a

111b

111

h

112

A-A

2r

**Fig. 4c**

113

111a

111b

111#

da

db

111+

l

112

B-B

**Fig. 4d**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005003631 A
- EP 666467 A
- US 20060230841 A
- US 20080072686 A
- US 20110154913 A
- US 20110247430 A
- US 20110314929 A
- US 20130282309 A
- US 20160041016 A
- US 20170284841 A
- US 6003384 A
- US 6101885 A
- US 6352000 B
- US 6910387 B
- US 6938496 B
- US 8010312 B
- US 8200450 B
- US 8370098 B
- US 8447536 B
- WO 9843051 A
- WO 2011043667 A
- WO 2017153124 A
- WO 2019245645 A
- DE 102018132311 A1
- WO 2020120060 A